(19) Europäisches Patentamt
European Patent Office
Office européen des brevets

(11) **EP 4 625 251 A1**

(12) **DEMANDE DE BREVET EUROPEEN**

(43) Date de publication:
**01.10.2025 Bulletin 2025/40**

(21) Numéro de dépôt: **25166181.5**

(22) Date de dépôt: **25.03.2025**

(51) Classification Internationale des Brevets (IPC):
**G06N 3/045** (2023.01)　　　**G06N 3/088** (2023.01)

(52) Classification Coopérative des Brevets (CPC):
**G06N 3/045;** G06N 3/088; G06N 3/09

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **25.03.2024 FR 2402941**

(71) Demandeurs:
- **Electricité de France**
  **75008 Paris (FR)**
- **CentraleSupélec**
  **91190 - Gif sur Yvette (FR)**
- **Centre National de la Recherche Scientifique**
  **75016 Paris (FR)**
- **Université Paris-Saclay**
  **91190 Gif-sur-Yvette (FR)**
- **SORBONNE UNIVERSITE**
  **75006 Paris (FR)**

(72) Inventeurs:
- **EL SEMAAN, Elio**
  **91120 PALAISEAU (FR)**
- **CROTEAU, Dominique**
  **78500 SARTROUVILLE (FR)**
- **RIFI, Mouna**
  **94230 CACHAN (FR)**
- **LE, Trung Dung**
  **91940 LES ULIS (FR)**
- **DESSANTE, Philippe**
  **91192 GIF SUR YVETTE CÉDEX (FR)**
- **IOVINE, Alessio**
  **91192 GIF SUR YVETTE CÉDEX (FR)**
- **KAMGA, Teukam Donat Keddy**
  **92160 ANTONY (FR)**

(74) Mandataire: **Plasseraud IP**
**104 Rue de Richelieu**
**CS92104**
**75080 Paris Cedex 02 (FR)**

(54) **PROCÉDÉ DE CONFIGURATION D'UN RÉSEAU NEURONAL, DISPOSITIF ET PROGRAMME INFORMATIQUE POUR LA MISE EN OEUVRE DU PROCÉDÉ**

(57) Un procédé mis en œuvre par ordinateur de configuration d'un réseau neuronal en graphe pour gérer un réseau électrique comprenant un ensemble de nœuds est proposé, qui comprend : obtenir des données représentatives de topologie du réseau électrique, les données représentatives de topologie comprenant un nombre $N$ de nœuds ; configurer $N_{gnn}$ couches de réseau neuronal du réseau neuronal en graphe, chaque couche $i$ de réseau neuronal comprenant un ou plusieurs réseaux de neurones $L(k, i)$, et dans lequel le nombre $N_{gnn}$ couches de réseau neuronal correspond au nombre $N$ de nœuds du réseau électrique ; configurer, sur la base des données représentatives de topologie du réseau électrique des connexions neuronales du réseau neuronal en graphe ; et utiliser le réseau neuronal en graphe configuré pour la gestion du réseau électrique.

Obtenir des données représentatives de topologie
du réseau électrique, les données représentatives
de topologie comprenant un nombre $N$ de noeuds

10a-1

Configurer $N_{gnn}$ couches de réseau neuronal du réseau
neuronal en graphe, chaque couche $i$ de réseau neuronal
comprenant un ou plusieurs réseaux de neurones $L(k,i)$,
et le nombre $N_{gnn}$ de couches de réseau neuronal
correspondant au nombre $N$ de noeuds du réseau électrique

10a-2

Configurer, sur la base des données représentatives
de topologie du réseau électrique comprenant une
ou plusieurs connexions dans le réseau électrique,
pour chaque connexion existant entre un premier et
un deuxième noeud du réseau électrique correspondant
respectivement à la connexion, une connexion neuronale
entre un réseau de neurones $L(k,i1)$ d'une première
couche $i1$ du réseau neuronal en graphe et un réseau
de neurones $L(j,i2)$ d'une deuxième couche i2 du réseau
neuronal en graphe, le premier et le deuxième noeud du
réseau électrique correspondant respectivement aux
première et deuxième couches $i1$ et $i2$ du réseau neuronal
en graphe et la connexion neuronale entre les réseaux
de neurones L(k,i1) et L(j,i2) correspondant à la connexion
dans le réseau électrique entre le premier
et le deuxième noeud

10a-3

Utiliser le réseau neuronal en graphe configuré pour
la gestion du réseau électrique

10a-4

10a

# FIG. 2A

[Fig. 2b]

## Description

### Domaine technique

La présente invention se rapporte à un procédé de configuration d'un réseau neuronal pour la gestion d'un réseau électrique, à un dispositif et un logiciel informatique pour la mise en œuvre de ce procédé. Elle s'applique notamment à la gestion de réseaux électriques basse-tension, en particulier à la gestion d'état d'un réseau électrique basse-tension.

### Technique antérieure

Les réseaux électriques de distribution basse tension (BT) sont confrontés à des défis majeurs, parmi lesquels, l'augmentation de l'intégration des producteurs photovoltaïques (PV) sur le réseau électrique BT, l'introduction de nouveaux usages comme la recharge des Véhicules Electriques (VE) et l'utilisation de plus en plus répandue de pompes à chaleur.

Cependant, les réseaux BT ayant été initialement conçus pour principalement (voire exclusivement) acheminer l'électricité jusqu' aux consommateurs (résidentiels, professionnels, tertiaires, ...), l'intégration de la production décentralisée d'électricité sur ces réseaux risque de mettre ces réseaux sous de nouvelles contraintes de hausses des niveaux de tension. En outre, les nouveaux usages comme la recharge des VE risquent de mettre les réseaux BT sous d'autres nouvelles contraintes de fortes chutes de tension en cas de recharge simultanée non pilotée.

Le déploiement des compteurs intelligents permet d'améliorer l'observabilité des réseaux BT. Toutefois, le relevé des données des mesures de ces compteurs en temps réel et en simultané est limité par les contraintes de communication.

Il existe ainsi un besoin pour un procédé de gestion de réseau électrique permettant d'observer et de surveiller l'état d'un réseau électrique soumis à ces nouvelles contraintes.

### Résumé

La présente divulgation vient améliorer la situation.

Selon un premier aspect, il est proposé un procédé mis en œuvre par ordinateur de de configuration d'un réseau neuronal en graphe pour (utilisation du réseau neuronal en graphe pour) gérer un réseau électrique comprenant un ensemble de nœuds, qui comprend : Obtenir des données représentatives de topologie du réseau électrique, les données représentatives de topologie comprenant un nombre $N$ de nœuds ; configurer $N_{gnn}$ couches de réseau neuronal du réseau neuronal en graphe, chaque couche $i$ de réseau neuronal comprenant un ou plusieurs réseaux de neurones $L(k, i)$, et dans lequel le nombre $N_{gnn}$ couches de réseau neuronal correspond au nombre $N$ de nœuds du réseau électrique ; configurer, sur la base des données représentatives de topologie du réseau électrique comprenant une ou plusieurs connexions dans le réseau électrique, pour chaque connexion parmi les une ou plusieurs connexions dans le réseau électrique existant entre un premier et un deuxième nœud du réseau électrique correspondant respectivement à la connexion, une connexion neuronale entre un réseau de neurones $L(k, i1)$ d'une première couche $i1$ du réseau neuronal en graphe et un réseau de neurones $L(j, i2)$ d'une deuxième couche $i2$ du réseau neuronal en graphe, le premier et le deuxième nœud du réseau électrique correspondant respectivement aux première et deuxième couches $i1$ et $i2$ du réseau neuronal en graphe et la connexion neuronale entre les réseaux de neurones $L(k, i1)$ et $L(j, i2)$ correspondant à la connexion dans le réseau électrique entre le premier et le deuxième nœud ; et utiliser le réseau neuronal en graphe configuré pour la gestion du réseau électrique.

Grâce notamment à l'utilisation d'une représentation en graphes pour représenter des structures de données complexes correspondants aux réseaux électriques, le procédé proposé permet avantageusement la configuration de couches de réseau neuronal du réseau neuronal en graphe sur la base de données de topologie d'un réseau électrique à gérer. Le réseau neuronal en graphe peut être configuré avec au moins une couche pour chaque nœud du réseau électrique considéré, et des connexions neuronales peuvent être configurées entre réseaux de neurones de couches respectives pour mapper des connexions électriques respectives dans le réseau électrique à gérer.

Le réseau neuronal en graphe ainsi configuré peut alors être utilisé pour la mise en œuvre d'un estimateur d'état qui permet d'estimer les amplitudes des tensions d'un réseau BT à partir d'un faible nombre de mesures remontées, par exemple en temps réel (ou quasi-temps réel).

Avantageusement, les réseaux neuronaux d'une ou plusieurs couches de réseau neuronal pourront avoir été préalablement entrainés en utilisant des données d'un ou plusieurs réseaux électriques d'apprentissage (telles que des données de topologie) distincts du réseau électrique à gérer. Par exemple, on pourra utiliser une couche modèle de réseau neuronal, pourra avantageusement avoir été préalablement entrainée en utilisant un ou plusieurs réseaux électriques d'apprentissage, puis dupliquer cette couche autant de fois que nécessaire pour représenter l'ensemble des nœuds du réseau électrique à gérer (par exemple un nombre de fois supérieur ou égal au nombre de nœuds du réseau électrique à gérer), puis configurer les réseaux de neurones de chaque couche sur la base des connexions électriques (et éventuellement des caractéristiques électrotechniques) du réseau électrique à gérer.

De plus, le procédé proposé peut avantageusement être mis en œuvre pour la gestion de tout réseau électrique, y compris un réseau électrique d'envergure comprenant un grand nombre de réseaux basse-tension, comme par exemple le réseau électrique français qui compte plus de 700 000 postes de distribution publiques HTA/BT (et donc le même nombre de réseaux BT).

Grâce à l'utilisation d'un réseau neuronal en graphe configuré selon le procédé proposé, le procédé proposé permet en outre avantageusement de fournir aux Gestionnaires des Réseaux de Distribution (GRD) un outil d'observation en temps réel (ou quasi-temps réel) des niveaux de tension sur tous les nœuds d'un réseau BT, permettant par exemple avantageusement de maintenir le niveau de tension dans une plage réglementée (par exemple une plage de $\pm 10\%$ autour d'une tension nominale du réseau).

Les caractéristiques exposées dans les paragraphes suivants peuvent, optionnellement, être mises en œuvre. Elles peuvent être mises en œuvre indépendamment les unes des autres ou en combinaison les unes avec les autres.

Dans un ou plusieurs modes de réalisation, les mesures obtenues comprennent en outre une ou plusieurs parmi des mesures de puissance active et des mesures de puissance réactive, pour chaque nœud du sous-ensemble de l'ensemble de nœuds du réseau électrique, et dans lequel l'estimation des amplitudes de tensions est déterminée en outre sur la base de l'une ou plusieurs parmi les mesures de puissance active et des mesures de puissance réactive des nœuds du sous-ensemble. La collecte d'une ou plusieurs parmi des mesures de puissance active et des mesures de puissance réactive, pour chaque nœud du sous-ensemble de l'ensemble de nœuds du réseau électrique, permet d'utiliser ces données comme données d'entrée du réseau neuronal en graphe en phase d'inférence pour améliorer la détermination de l'estimation des amplitudes de tensions. Par exemple, ces données collectées peuvent être utilisées pour configurer le réseau neuronal en graphe pour déterminer une estimation des amplitudes de tension sous contrainte de respect de lois physiques prédéfinies, comme expliqué plus en détails dans un ou plusieurs modes de réalisation ci-dessous.

Dans un ou plusieurs modes de réalisation, chaque couche $i$ de réseau neuronal peut comprendre en outre un encodeur $E(i)$ configuré pour recevoir données d'entrée du réseau neuronal en graphe et couplé de manière opérationnelle à un premier parmi un ou plusieurs réseaux de neurones $L(k, i)$, et un décodeur $D(i)$ couplé de manière opérationnelle à un deuxième parmi les un ou plusieurs réseaux de neurones $L(k, i)$ et configuré pour produire en sortie des données de sortie du réseau neuronal en graphe. Dans ces modes de réalisation, un ou plusieurs parmi l'encodeur $E(i)$ et le décodeur $D(i)$ peuvent être des réseaux de neurones préalablement entraînés selon une phase d'apprentissage (du réseau neuronal en graphe).

Dans un ou plusieurs des modes de réalisation, le réseau neuronal en graphe configuré peut être utilisé pour déterminer une estimation des amplitudes de tensions respectives d'un ensemble de nœuds du réseau électrique sur la base de mesures de tension des nœuds d'un sous-ensemble de l'ensemble de nœuds du réseau électrique fournies en entrée du réseau neuronal en graphe.

Dans un ou plusieurs modes de réalisation, les données représentatives de topologie du réseau électrique peuvent être comprises dans une structure de données correspondant à une représentation en graphe $G = (V, E)$ du réseau électrique, dans lequel $V$ désigne un ensemble de nœuds du graphe représentant respectivement des nœuds du réseau électrique et $E$ désigne un ensemble de connexions du graphe représentant respectivement des connexions électriques entre les nœuds du réseau électrique. Le réseau neuronal en graphe peut en outre être configuré en établissant des correspondances respectives entre un ou plusieurs parmi les nœuds de l'ensemble $V$ du graphe et les couches de réseau neuronal du réseau neuronal en graphe et les connexions de l'ensemble $E$ du graphe et les connexions neuronales du réseau neuronal en graphe.

Dans un ou plusieurs modes de réalisation, le procédé proposé peut comprendre en outre : effectuer une phase d'apprentissage des un ou plusieurs réseaux de neurones $L(k, i)$ des couches du réseau neuronal en graphe, suite à laquelle chaque couche $i$ de réseau neuronal comprend un ou plusieurs réseaux de neurones $L(k, i)$ entrainés.

Dans un ou plusieurs modes de réalisation, le réseau neuronal en graphe peut être de type à transmission de messages, chaque couche $i$ de réseau neuronal peut comprendre en outre un encodeur $E(i)$ configuré pour recevoir données d'entrée du réseau neuronal en graphe et couplé de manière opérationnelle à un parmi l'un ou plusieurs réseaux de neurones $L(k, i)$, et un décodeur $D(i)$ couplé de manière opérationnelle à un parmi les un ou plusieurs réseaux de neurones $L(k, i)$ et configuré pour produire en sortie des données de sortie du réseau neuronal en graphe, l'encodeur $E(i)$ comprenant un réseau de neurones totalement connecté configuré pour générer un message par encodage de données fournies en entrée de la couche $i$ du réseau neuronal en graphe, et le décodeur comprenant un réseau de neurones totalement connecté configuré pour générer des données de sortie de la couche $i$ du réseau neuronal en graphe par décodage d'un message reçu d'un réseaux de neurones de la couche $i$ du réseau neuronal en graphe.

Dans un ou plusieurs modes de réalisation, le procédé proposé peut en outre comprendre : effectuer une phase d'apprentissage du réseau neuronal en graphe sur la base de données respectivement représentatives de topologie d'un ou plusieurs réseaux électriques d'apprentissage.

Dans un ou plusieurs modes de réalisation, le procédé proposé peut en outre comprendre : gérer le réseau électrique sur la base de l'estimation des amplitudes de tensions respectives des nœuds de l'ensemble de nœuds.

Un autre aspect concerne un dispositif de gestion de réseau électrique, comprenant un processeur, une interface de communications de données et une mémoire, couplées de manière opérationnelle au processeur, dans lequel le processeur est configuré pour la mise en œuvre d'un procédé selon l'un des modes de réalisation proposés dans la présente demande.

Un autre aspect concerne un programme d'ordinateur, chargeable dans une mémoire associée à un processeur, et comprenant des portions de code pour la mise en œuvre d'un procédé selon l'un des modes de réalisation proposés dans la présente demande lors de l'exécution dudit programme par le processeur.

Un autre aspect concerne un ensemble de données représentant, par exemple par voie de compression ou d'encodage, un programme d'ordinateur tel que proposé dans la présente demande.

Un autre aspect concerne un support de stockage non-transitoire d'un programme exécutable par ordinateur, comprenant un ensemble de données représentant un ou plusieurs programmes, lesdits un ou plusieurs programmes comprenant des instructions pour, lors de l'exécution desdits un ou plusieurs programmes par un ordinateur comprenant un processeur couplé de manière opérationnelle à une mémoire et à une interface entrées/sorties de communication de données, conduire l'ordinateur à configurer un réseau neuronal en graphe selon un procédé selon l'un des modes de réalisation proposés dans la présente demande.

Un autre aspect concerne un support de stockage non-transitoire d'un programme exécutable par ordinateur, comprenant un ensemble de données représentant un ou plusieurs programmes, lesdits un ou plusieurs programmes comprenant des instructions pour, lors de l'exécution desdits un ou plusieurs programmes par un ordinateur comprenant une unité de traitement couplée de manière opérationnelle à des moyens mémoire et à un module d'interface entrées/sorties, conduire l'ordinateur à mettre en œuvre un procédé selon l'un des modes de réalisation proposés dans la présente demande.

## Brève description des dessins

D'autres particularités et avantages de la présente divulgation apparaîtront dans la description ci-après d'exemples de réalisation non limitatifs, en référence aux dessins annexés, dans lesquels :

**Fig. 1**

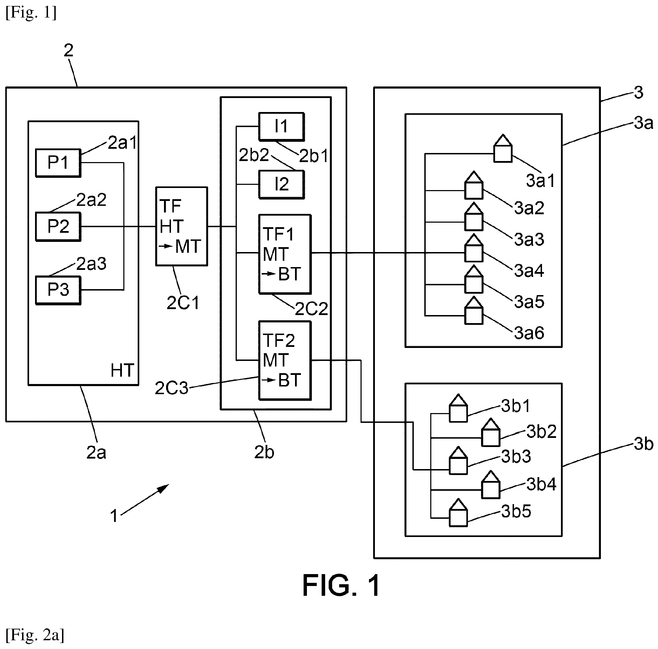

[Fig. 1] est un schéma illustrant un exemple d'architecture de réseau électrique comprenant des réseaux basse-tension (BT) pour la mise en œuvre du procédé proposé selon un ou plusieurs modes de réalisation ;

**Fig. 2a**

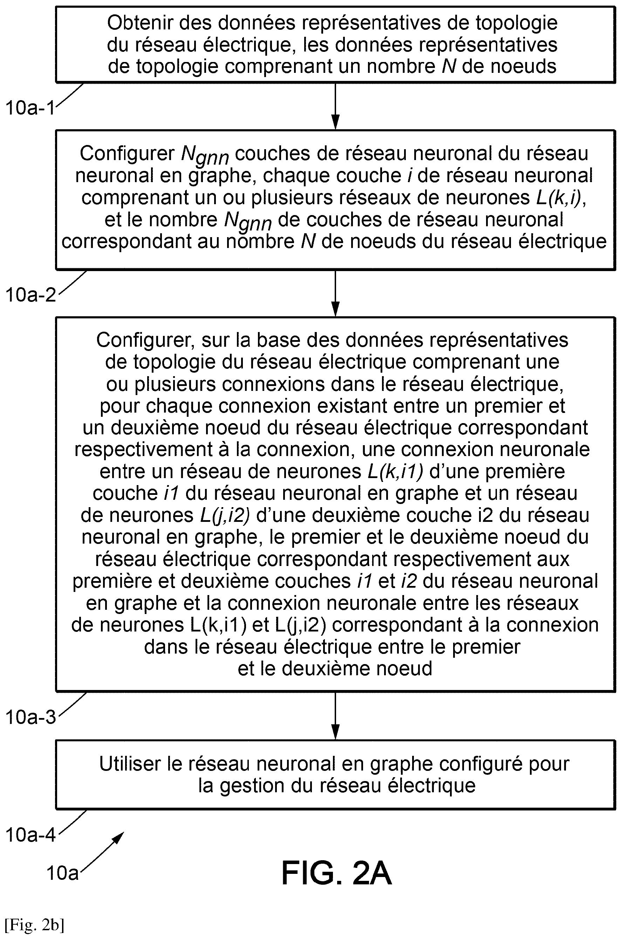

[Fig. 2a] est un diagramme illustrant un procédé proposé de configuration d'un réseau neuronal en graphe selon un ou plusieurs modes de réalisation ;

**Fig. 2b**

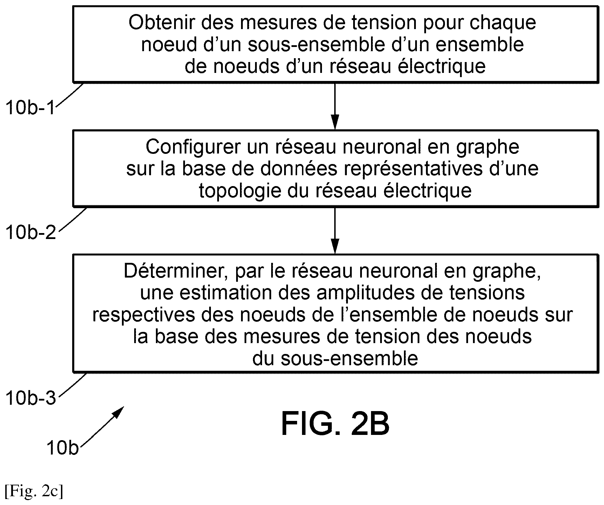

[Fig. 2b] est un diagramme illustrant un procédé proposé de gestion d'un réseau électrique selon un ou plusieurs modes de réalisation ;

**Fig. 2c**

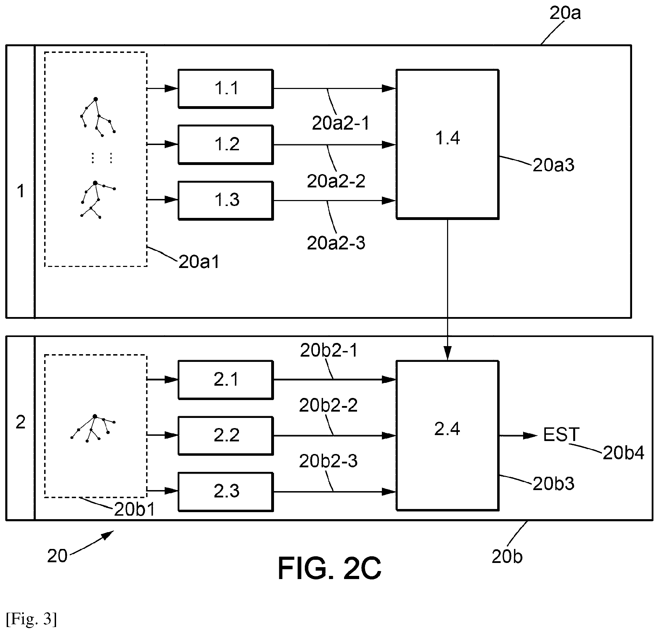

[Fig. 2c] est un diagramme illustrant un procédé proposé de gestion d'un réseau électrique selon un ou plusieurs modes de réalisation ;

**Fig. 3**

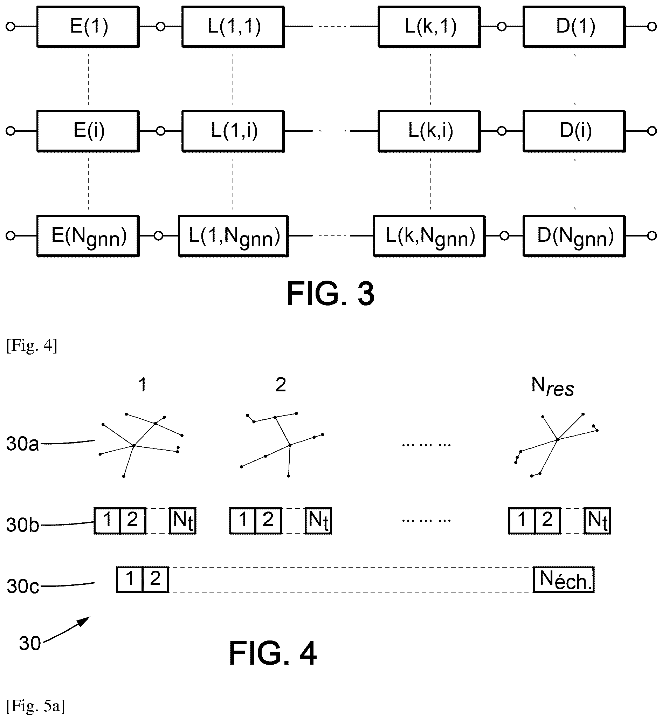

[Fig. 3] est un schéma illustrant un exemple de réseau neuronal en graphe comprenant $N_{gnn}$ couches selon un ou plusieurs modes de réalisation ;

**Fig. 4**
[Fig. 4] est un schéma illustrant un exemple de constitution d'une base de données d'apprentissage selon un ou plusieurs modes de réalisation ;

**Fig. 5a**

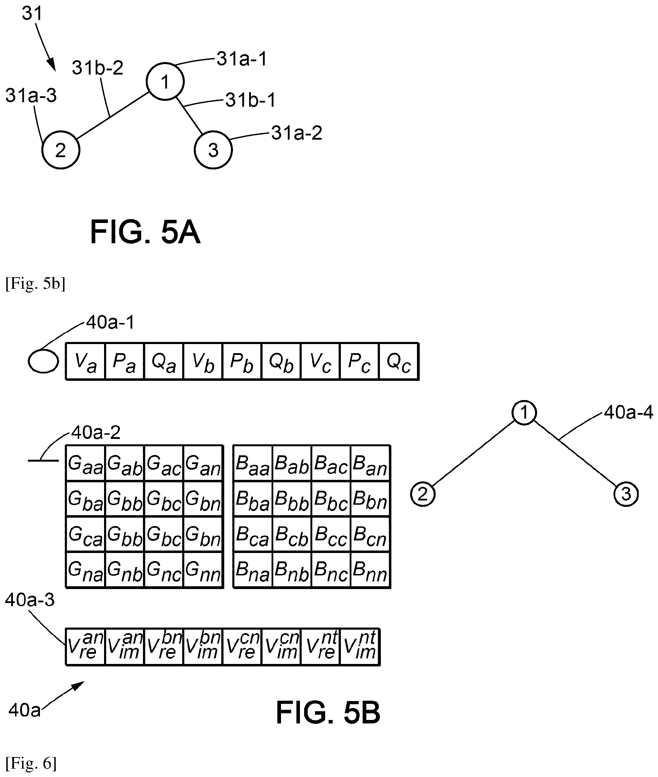

[Fig. 5a] illustre un exemple de réseau électrique selon un ou plusieurs modes de réalisation ;

**Fig. 5b**
[Fig. 5b] illustre un exemple de représentation en graphe obtenue pour un exemple de réseau électrique selon un ou plusieurs modes de réalisation ;

**Fig. 6**

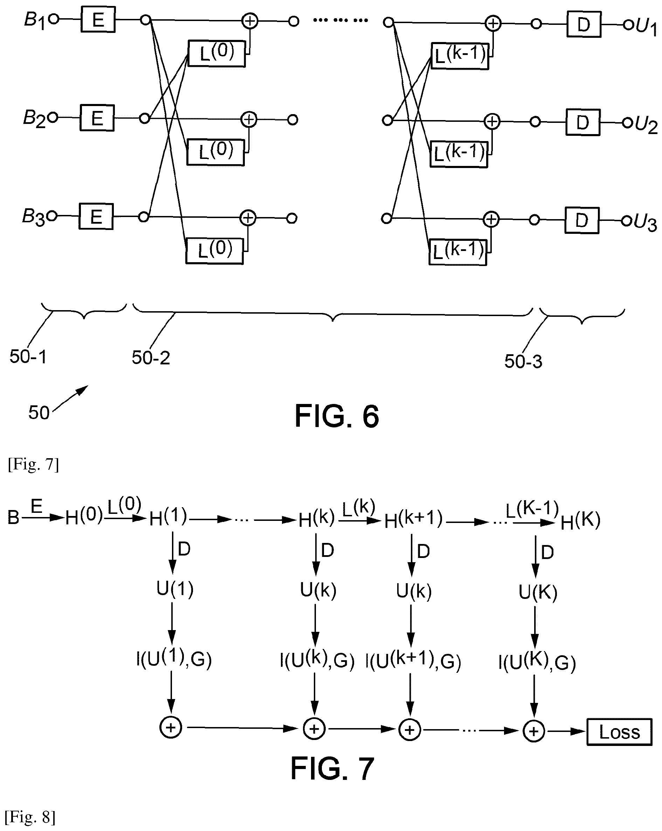

[Fig. 6] illustre un exemple d'architecture de réseau neuronal en graphe selon un ou plusieurs modes de réalisation ;

**Fig. 7**

[Fig. 7] illustre un exemple de mise en œuvre d'apprentissage du réseau neuronal en graphe selon un ou plusieurs modes de réalisation ;

**Fig. 8**

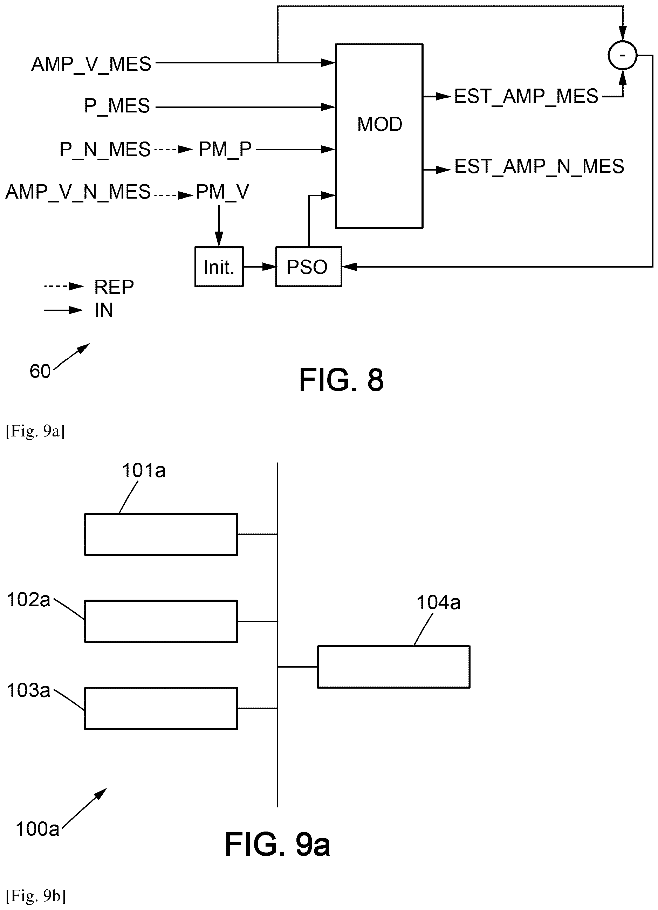

[Fig. 8] illustre un exemple de mise en œuvre de procédé de gestion d'un réseau électrique selon un ou plusieurs modes de réalisation ;

**Fig. 9a**

[Fig. 9a] est un diagramme illustrant un exemple d'architecture d'équipement pour la mise en œuvre du procédé proposé selon un ou plusieurs modes de réalisation.

**Fig. 9b**

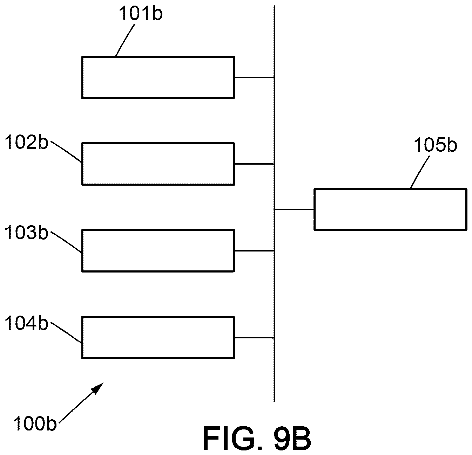

[Fig. 9b] est un diagramme illustrant un exemple d'architecture d'équipement pour la mise en œuvre d'un procédé de gestion de réseau électrique utilisant un réseau neuronal en graphe configuré selon un ou plusieurs modes de réalisation du procédé proposé.

## Description des modes de réalisation

Dans la description détaillée ci-après de modes de réalisation de l'invention, de nombreux détails spécifiques sont présentés pour apporter une compréhension plus complète. Néanmoins, l'homme du métier peut se rendre compte que des modes de réalisation peuvent être mis en pratique sans ces détails spécifiques. Dans d'autres cas, des caractéristiques bien connues ne sont pas décrites en détail pour éviter de compliquer inutilement la présente description.

La présente demande fait référence à des fonctions, moteurs, unités, modules, plateformes, et illustrations de diagrammes des méthodes et dispositifs selon un ou plusieurs modes de réalisation. Chacun des fonctions, moteurs, modules, plateformes, unités et diagrammes décrits peut être mis en œuvre sous forme matérielle, logicielle (y compris sous forme de logiciel embarqué (« firmware »), ou de « middleware »), microcode, ou toute combinaison de ces derniers. Dans le cas d'une mise en œuvre sous forme logicielle, les fonctions, moteurs, unités, modules et/ou illustrations de diagrammes peuvent être mis en œuvre par des instructions de programme d'ordinateur ou du code, qui peut être stocké ou transmis sur un support lisible par ordinateur, incluant un support non transitoire, ou un support chargé en mémoire d'un ordinateur générique, spécifique, ou de tout autre appareil ou dispositif programmable de traitement de données pour produire une machine, de telle sorte que les instructions de programme d'ordinateur ou le code exécuté(es) sur l'ordinateur ou l'appareil ou dispositif programmable de traitement de données, constituent des moyens de mise en œuvre de ces fonctions.

Les modes de réalisation d'un support lisible par ordinateur incluent, de manière non exhaustive, des supports de stockage informatique et des supports de communication, y compris tout support facilitant le transfert d'un programme d'ordinateur d'un endroit vers un autre. Par « support(s) de stockage informatique », on entend tout support physique pouvant être accédé par ordinateur. Les exemples de support de stockage informatique incluent, de manière non limitative, les disques ou composants de mémoire flash ou tous autres dispositifs à mémoire flash (par exemple des clés USB, des clés de mémoire, des sticks mémoire, des disques-clés), des CD-ROM ou autres dispositifs de stockage optique de données, des DVD, des dispositifs de stockage de données à disque magnétique ou autres dispositifs de stockage magnétique de données, des composants de mémoire de données, des mémoires RAM, ROM, EEPROM, des cartes mémoires («smart cards»), des mémoires de type SSD («Solid State Drive»), et toute autre forme de support utilisable pour transporter ou stocker ou mémoriser des données ou structures de données qui peuvent être lues par un processeur d'ordinateur.

En outre, diverses formes de support lisible par ordinateur peuvent transmettre ou porter des instructions vers un ordinateur, telles qu'un routeur, une passerelle, un serveur, ou tout équipement de transmission de données, qu'il s'agisse de transmission filaire (par câble coaxial, fibre optique, fils téléphoniques, câble DSL, ou câble Ethernet), sans-fil (par infrarouge, radio, cellulaire, microondes), ou des équipements de transmission virtualisés (routeur virtuel, passerelle virtuelle, extrémité de tunnel virtuel, pare-feu virtuel). Les instructions peuvent, selon les modes de réalisation, comprendre du code de tout langage de programmation informatique ou élément de programme informatique, tel que, sans limitation, les langages assembleur, C, C++, Visual Basic, HyperText Markup Language (HTML), Extensible Markup Language (XML), HyperText Transfer Protocol (HTTP), Hypertext Preprocessor (PHP), SQL, MySQL, Java, JavaScript, JavaScript Object Notation (JSON), Python, et bash scripting.

De plus, les termes « notamment», «par exemple», «exemple», «typiquement» sont utilisés dans la présente description pour désigner des exemples ou illustrations de modes de réalisation non limitatifs, qui ne correspondent pas nécessairement à des modes de réalisation préférés ou avantageux par rapport à d'autres aspects ou modes de réalisation possibles.

Les termes « couplé de manière opérationnelle», «couplé», «monté», «connecté» et leurs variantes et formes diverses utilisés dans les présentes font référence à des couplages, connexions, montages, qui peuvent être directs ou indirects, et comprennent notamment des connexions entre équipements électroniques ou entre des portions de tels équipements qui permettent des opérations et fonctionnements tels que décrits dans la présente demande. De plus, les termes « connectés» et «couplés» ne sont pas limités à des connections ou des couplages physiques ou mécaniques. Par exemple, un couplage de manière opérationnelle peut inclure une ou plusieurs connexion(s) filaire(s) et/ou une ou plusieurs connexion(s) sans-fil entre deux équipements ou plus qui permettent des liaisons de communication simplex et/ou duplex entre les équipements ou des portions des équipements. Selon un autre exemple, un couplage opérationnel ou une connexion peut inclure un couplage par liaison filaire et/ou sans-fil pour permettre des communications de données entre un serveur du système proposé et un autre équipement du système.

Les termes « réseau BT » tels qu'utilisés dans les présentes font référence à tous réseaux électriques comprenant un ou plusieurs composants situés en aval d'un poste de distribution HTA/BT, tels que, par exemple, un ou plusieurs transformateurs HTA/BT, lignes aériennes BT, câbles souterrains BT, consommateurs et producteurs raccordés au réseau.

Les termes « réseau d'apprentissage » tels qu'utilisés dans les présentes font référence à un réseau électrique utilisé pour constituer une base de données d'apprentissage lors de la mise en œuvre d'une phase d'apprentissage du réseau neuronal en graphe. Par exemple, un réseau d'apprentissage peut correspondre à un réseau électrique dont les données sont utilisées dans la base de données utilisée durant la phase d'apprentissage du modèle basé sur les réseaux de neurones.

Les termes « réseau d'application » et « réseau électrique considéré » tels qu'utilisés de manière interchangeable dans les présentes font référence à un réseau électrique auquel on applique un procédé proposé selon un mode de réalisation de la présente divulgation. Par exemple, un réseau d'application est un réseau auquel on applique un modèle entrainé de type réseau neuronal en graphe pour faire une estimation d'état afin de déterminer une estimation des amplitudes de tensions respectives de tous les nœuds du réseau d'application sur la base de mesures de tension des nœuds d'un sous-ensemble des nœuds de ce réseau.

Les termes « réseau neuronal en graphe » et « réseaux de neurones en graphe » (en anglais « graph neural network », ou « GNN ») tels qu'utilisés de manière interchangeable dans les présentes désignent tout réseau neuronal (ou réseau de neurones) configuré pour le traitement de données pouvant être représentées par un graphe.

Le terme « graphe » (en anglais « graph ») tel qu'utilisé dans les présentes désigne toute structure de données représentant des objets et des relations (liens) entre ces objets. Une structure de données en graphe comprend typiquement un ensemble de nœuds (en anglais « node » ou « vertex ») et de liens (parfois dénommés « arêtes ») (en anglais « link » ou « edge »). Un lien du graphe peut représenter une relation entre deux nœuds du graphe et peut être, en fonction du graphe considéré, orienté ou non orienté.

La figure 1 illustre un exemple d'architecture de réseau électrique (1) comprenant des réseaux basse-tension (BT) (3) pour la mise en œuvre du procédé proposé selon un ou plusieurs modes de réalisation.

En référence à la figure 1, le réseau électrique (1) comprend un réseau de transport (2) couplé électriquement à un réseau de distribution (3). Le réseau de transport (2) comprend un réseau haute-tension (2a) comprenant des unités de production (P1, P2, P3) (2a1, 2a2, 2a3), connecté électriquement par un ou plusieurs transformateurs (2c1) haute-tension (HT) vers moyenne-tension (MT) à un réseau moyenne-tension (2b) comprenant des infrastructures moyenne-tension (I1, I2) (2b1, 2b2).

Le réseau MT (2b) est connecté électriquement à deux réseaux basse-tension (3a, 3b) par le biais de transformateurs (TF1 MT->BT, TF2 MT->BT) (2c2, 2c3) MT vers BT, respectivement.

Chacun des réseaux basse-tension (3a et 3b) comprend plusieurs nœuds (3a1 à 3a6 pour le réseau 3a, et 3b1 à 3b5 pour le réseau 3b) qui peuvent être, selon le mode de réalisation, des nœuds consommateurs et/ou producteurs d'énergie électrique.

L'homme du métier comprendra que les procédés et systèmes proposés ne sont pas limités à un ou plusieurs types particuliers de réseau électrique BT, que ce soit pour le type de nœud du réseau électrique ou le type de lien de transport de l'électricité entre différents nœuds du réseau ou pour alimenter le réseau. De même, les procédés et systèmes proposés ne sont pas limités à une ou plusieurs architecture(s) de réseau électrique BT.

Dans un ou plusieurs modes de réalisation, une structure de données en graphe pourra être générée à partir de données d'un réseau électrique utilisé dans le mode de réalisation. Dans les modes de réalisation où plusieurs réseaux électriques sont utilisés, on pourra générer une structure de données en graphe respective pour un ou plusieurs (chacun) de ces réseaux électriques.

Une structure de données en graphe correspondant à un réseau électrique peut ensuite être utilisée pour configurer un réseau de neurones en graphe correspondant au réseau électrique pour la mise en œuvre d'un ou plusieurs modes de réalisation. La configuration d'un réseau de neurones en graphe correspondant à un réseau électrique peut par exemple utiliser des données de topologie du réseau électrique (le cas échéant reflétées par la structure de données en graphe), en particulier par exemple des données de description de nœuds du réseau électrique et de liens entre les nœuds du réseau électrique.

Dans un ou plusieurs modes de réalisation, un réseau électrique peut être décrit par une structure de données de type graphe $G = (V, E)$, dans laquelle l'ensemble $V$ de nœuds du graphe $G$ représente les nœuds de réseau du réseau électrique, et l'ensemble $E$ de liens du graphe $G$ représente des liaisons électriques entre deux nœuds du réseau électrique.

La figure 2a est un diagramme illustrant un procédé (10a) de configuration d'un réseau neuronal en graphe selon un ou plusieurs modes de réalisation.

En référence à la figure 2a, on envisage un réseau électrique comprenant un ensemble de nœuds, comme par exemple un réseau électrique de type basse-tension (BT).

Dans un ou plusieurs modes de réalisation, données représentatives de topologie du réseau électrique peuvent être obtenues (10a_1). Dans certains modes de réalisation, les données représentatives de topologie peuvent comprendre une information relative à un nombre $N$ de nœuds.

Dans un ou plusieurs modes de réalisation, $N_{gnn}$ couches de réseau neuronal du réseau neuronal en graphe peuvent être configurées (10a_2), chaque couche $i$ de réseau neuronal comprenant un ou plusieurs réseaux de neurones $L(k, i)$, et le nombre $N_{gnn}$ couches de réseau neuronal correspondant au nombre $N$ de nœuds du réseau électrique.

Dans un ou plusieurs modes de réalisation, les $N_{gnn}$ couches de réseau neuronal du réseau neuronal en graphe peuvent avoir une structure identique ou similaire d'une couche à l'autre. Par exemple, dans certains modes de réalisation, les $N_{gnn}$ couches de réseau neuronal du réseau neuronal en graphe peuvent être générées en dupliquant $N_{gnn}$ fois une couche de réseau neuronal (dite « modèle » ou « matrice ») comprenant un ou plusieurs réseaux de neurones.

Dans un ou plusieurs modes de réalisation, on configure (10a_3), sur la base des données représentatives de topologie du réseau électrique comprenant une ou plusieurs connexions dans le réseau électrique, pour chaque connexion parmi les une ou plusieurs connexions dans le réseau électrique existant entre un premier et un deuxième nœud du réseau électrique correspondant respectivement à la connexion, une connexion neuronale entre un réseau de neurones $L(k, i1)$ d'une première couche $i1$ du réseau neuronal en graphe et un réseau de neurones $L(j, i2)$ d'une deuxième couche $i2$ du réseau neuronal en graphe. Dans certains modes de réalisation, les premier et deuxième nœuds du réseau électrique peuvent correspondre respectivement aux première et deuxième couches $i1$ et $i2$ du réseau neuronal en graphe. Dans certains modes de réalisation, la connexion neuronale entre les réseaux de neurones $L(k, i1)$ et $L(j, i2)$ peut correspondre à la connexion dans le réseau électrique entre le premier et le deuxième nœud. Ainsi, le réseau neuronal en graphe peut être configuré avec une structure de couches et de connexions neuronales qui correspond à la structure du réseau électrique à gérer, ou dans certains modes de réalisation à une structure de données en graphe représentant le réseau électrique à gérer.

Dans un ou plusieurs modes de réalisation, le réseau neuronal en graphe ainsi configuré peut être utilisé (10a_4) pour la gestion du réseau électrique, par exemple selon un mode de réalisation d'un procédé de gestion de réseau électrique décrit dans la présente divulgation.

La figure 2b est un diagramme illustrant un procédé (10b) de gestion d'un réseau électrique selon un ou plusieurs modes de réalisation.

En référence à la figure 2b, on envisage un réseau électrique comprenant un ensemble de nœuds, comme par exemple un réseau électrique de type basse-tension (BT).

Dans un ou plusieurs modes de réalisation, des mesures de tension sont obtenues (10b_1) pour chaque nœud d'un sous-ensemble de l'ensemble de nœuds du réseau électrique. Avantageusement, le sous-ensemble de nœuds contient un nombre de nœuds $N_s$ très inférieur au nombre total $N_T$ de nœuds du réseau électrique ($N_s \ll N_T$), de sorte que le procédé proposé peut avantageusement être mis en œuvre en effectuant des mesures sur un nombre de nœuds du réseau électrique considéré qui est faible devant le nombre total de nœuds du réseau, évitant ainsi la contrainte d'effectuer des mesures sur la totalité ou quasi-totalité des nœuds du réseau électrique considéré.

Dans un ou plusieurs modes de réalisation, un réseau neuronal en graphe est configuré (10b_2) sur la base de données représentatives d'une topologie du réseau électrique.

On dispose donc de données représentatives d'une topologie du réseau électrique considéré, décrivant par exemple l'architecture du réseau, comme par exemple des données décrivant chaque nœud du réseau ainsi que les liaisons électriques reliant respectivement une ou plusieurs paires de nœuds du réseau.

Dans un ou plusieurs modes de réalisation, ces données représentatives de topologie du réseau électrique peuvent être utilisées pour configurer un réseau neuronal en graphe, par exemple lors d'une phase d'autoconfiguration du réseau neuronal en graphe comme décrit ci-après.

Dans un ou plusieurs modes de réalisation, le réseau neuronal en graphe peut en outre être configuré sur la base de données respectivement représentatives de caractéristiques électrotechniques du réseau électrique considéré. Dans ces modes de réalisation, l'estimation des amplitudes de tension peut avantageusement être en outre déterminée sur la base des données respectivement représentatives de caractéristiques électrotechniques du réseau électrique considéré.

Dans un ou plusieurs modes de réalisation, le réseau neuronal en graphe une fois configuré peut être utilisé pour déterminer (10b_3) une estimation des amplitudes de tensions respectives des nœuds de l'ensemble de nœuds sur la base des mesures de tension des nœuds du sous-ensemble.

Les mesures de tension obtenues sur les nœuds du sous-ensemble peuvent ainsi être utilisées pour générer des données fournies comme données d'entrée au réseau neuronal en graphe configuré. Dans un ou plusieurs modes de réalisation, le réseau neuronal en graphe peut alors déterminer une estimation des amplitudes de tensions respectives des nœuds de l'ensemble de nœuds du réseau électrique (par exemple déterminer une estimation des amplitudes de tensions respectives de tous les nœuds du réseau électrique, ou, en fonction du mode de réalisation, d'un ou plusieurs nœuds du réseau électrique pour lesquels une mesure de tension n'a pas été effectuée).

Avantageusement, le procédé proposé permet ainsi d'obtenir une estimation des amplitudes de tension d'un ou plusieurs nœuds d'un réseau électrique (par exemple un réseau électrique BT) pour lesquels aucune mesure de tension n'est effectuée, de sorte qu'il est possible, en utilisant un réseau neuronal en graphe que l'on configure à partir de données de topologie du réseau électrique considéré et auquel on fournit en entrée des mesures de tension effectuées sur un nombre de nœuds (d'un sous-ensemble d'un ensemble de nœuds) du réseau strictement inférieur (par exemple très faible par rapport) au nombre total (de l'ensemble) de nœuds du réseau électrique, d'obtenir (en fonction du mode de réalisation, en temps-réel ou quasi temps-réel) des données d'amplitude de tension pour des nœuds (de l'ensemble de nœuds) du réseau, notamment pour des nœuds pour lesquels la mesure de tension n'a pas été effectuée.

Dans un ou plusieurs modes de réalisation, les mesures de tension obtenues peuvent comprendre en outre une ou plusieurs parmi des mesures de puissance(s) active(s) et des mesures de puissance(s) réactive(s) d'une ou plusieurs parmi 3 phases, pour chaque nœud du sous-ensemble de l'ensemble de nœuds du réseau électrique. Dans ces modes de réalisation, l'estimation des amplitudes de tension peut être déterminée en outre sur la base de l'une ou plusieurs parmi les mesures de puissance active et des mesures de puissance réactive des nœuds du sous-ensemble.

Dans un ou plusieurs modes de réalisation, le réseau neuronal en graphe peut être configuré avec $N_{gnn}$ couches de réseau neuronal, chaque couche $i$ ($1 \leq i \leq N_{gnn}$) de réseau neuronal comprenant un encodeur $E(i)$ configuré pour recevoir en entrée des données de mesures de tension et couplé de manière opérationnelle à un parmi un ou plusieurs réseaux de neurones $L(k, i)$ ($1 \leq k \leq K$), et un décodeur $D(i)$ couplé de manière opérationnelle à un parmi les un ou plusieurs réseaux de neurones $L(k, i)$ et configuré pour produire en sortie des données d'estimation des amplitudes de tensions. Dans un ou plusieurs modes de réalisation, le nombre $N_{gnn}$ de couches de réseau neuronal peut être choisi correspondant au nombre de nœuds du réseau électrique considéré.

La figure 3 est un schéma illustrant un exemple de réseau neuronal en graphe comprenant $N_{gnn}$ couches.

Dans l'exemple illustré, chaque couche $i$ de réseau neuronal est configurée selon une structure comprenant un ensemble de réseaux de neurones comprenant un réseau neuronal encodeur $E(i)$ configuré pour recevoir en entrée des données de mesures de tension, et couplé de manière opérationnelle à une séquence de $K$ réseaux de neurones $L(k, i)$ ($1 \leq k \leq K$) couplés de manière opérationnelle les uns aux autres selon la séquence $\{L(k, i)\}_{1 \leq k \leq K}$ : le réseau neuronal $E(i)$ est couplé à un premier réseau neuronal $L(1, i)$ de la séquence, qui est couplé à un deuxième réseau neuronal $L(2, i)$ de la séquence de la couche $i$, lui-même couplé au réseau suivant de la séquence $\{L(k, i)\}_{1 \leq k \leq K}$: le réseau neuronal $L(k, i)$ est couplé au réseau neuronal qui le suit dans la séquence $L(k + 1, i)$. Le dernier réseau neuronal $L(K, i)$ de la séquence $\{L(k, i)\}_{1 \leq k \leq K}$ est couplé de manière opérationnelle au réseau neuronal décodeur $D(i)$ de la couche $i$, qui est configuré pour produire en sortie des données d'estimation des amplitudes de tensions.

Dans un ou plusieurs modes de réalisation, comme illustré par la figure 3, le réseau neuronal en graphe, utilisé pour mettre en œuvre le procédé proposé pour un réseau électrique comprenant $N_t$ nœuds, peut être généré en dupliquant une couche (parfois dénommée dans la présente divulgation « couche de base ») (par exemple de structure correspondant à celle illustrée sur la figure 3) un nombre de fois correspondant au nombre $N_t$ de nœuds du réseau électrique considéré. Par exemple, pour effectuer le traitement d'un réseau électrique comprenant $N_t$ nœuds selon le procédé proposé, on peut générer un réseau neuronal en graphe en dupliquant au moins $N_t$ fois une couche de base, afin d'utiliser un réseau neuronal en graphe comprenant au moins $N_t$ couches ($N_{gnn} \geq N_t$, par exemple $N_{gnn} = N_t$).

La figure 2c fournit un autre exemple de diagramme illustrant un procédé proposé de gestion d'un réseau électrique selon un ou plusieurs modes de réalisation, auquel il est fait référence dans la description qui suit de modes de réalisation d'une phase d'apprentissage du réseau neuronal en graphe et de modes de réalisation d'une phase d'inférence du réseau neuronal en graphe selon la présente divulgation.

Dans le cadre de la présente divulgation, on considère un réseau de neurones en graphe, sans limitation sur le type de ce réseau de neurones en graphe. Par exemple, le réseau de neurones en graphe utilisé pourra être de tout type convenant pour la mise en œuvre de modes de réalisation de la présente divulgation, connu ou à venir, comme par exemple (d'architecture) de type MPGNN (de l'anglais « Message-Passing Graph Neural Network »), MPNN (de l'anglais « Message-passing Neural Network »), GCNN (de l'anglais « Graph Convolutional Neural Network »), GCN (de l'anglais « Graph Convolutional Network »), et réseau de neurones d'attention graphique GAT (de l'anglais « Graph Attention Network »), ou pourra comprendre une combinaison d'un ou plusieurs réseaux neuronaux de différents types (par exemple parmi ces types de réseaux neuronaux en graphe).

Les procédés et systèmes décrits dans la présente divulgation conviennent particulièrement bien pour la gestion et la maintenance de réseaux électriques, par l'estimation d'amplitudes de tensions respectives de nœuds d'un réseau électrique (estimation pouvant être obtenue sur tous les nœuds d'un réseau électrique (à l'exception éventuellement de nœuds pour lesquels une mesure de tension est effectuée) sur la base d'une mesure de ces tensions sur un nombre de nœuds petit en regard du nombre de nœuds du réseau sur lesquels une estimation est obtenue).

En fonction du mode de réalisation choisi, différents types ou architectures de réseau de neurones en graphe pourront être envisagés pour la mise en œuvre des procédés proposés. Ainsi, dans un ou plusieurs modes de réalisation, le procédé proposé pourra être mis en œuvre en utilisant un réseau de neurones en graphe de type MPNN (ou MPGNN). L'homme du métier comprendra cependant que le procédé proposé n'est pas limité à des mises en œuvre utilisant un ou plusieurs réseaux de neurones de type MPGNN, et qu'il peut être avantageusement utilisé avec tout réseau de neurones en graphe convenant pour sa mise en œuvre pour la gestion d'un réseau électrique selon un ou plusieurs modes de réalisation décrits dans la présente divulgation.

Dans ce qui suit, on considère l'exemple non limitatif d'une mise en œuvre utilisant un réseau neuronal en graphe de type MPGNN. Néanmoins, l'homme du métier pourra se rendre compte que tout réseau neuronal en graphe pourra être utilisé pour la mise en œuvre de modes de réalisation du procédé proposé à la place ou en complément d'un réseau de neurones de type MPGNN, qui est décrit seulement à titre d'exemple.

Les réseaux de neurones en graphe sont des réseaux de neurones dont l'architecture est configurée pour être adaptée au traitement de données qui peuvent être associées à une structure de données en graphe correspondante. Ainsi, les réseaux de neurones en graphe sont configurés avec une architecture particulièrement adaptée au traitement de données représentable sous forme d'un ensemble d'un ou plusieurs nœuds, et d'un ensemble d'une ou plusieurs liaisons entre ces nœuds. En fonction de la description des données choisie, un ou plusieurs nœuds peuvent posséder une ou plusieurs parmi des caractéristiques d'entrée(s) et des caractéristiques de sortie(s), et un ou plusieurs liens peuvent posséder une ou plusieurs parmi des caractéristiques d'entrée(s) et des caractéristiques de sortie(s).

Les réseaux de neurones en graphes peuvent être utilisés pour effectuer une tâche (classification, prédiction ou régression) qui peut être appliquée au niveau d'un ou plusieurs parmi : le graphe, un ou plusieurs parmi les liens, et un ou plusieurs parmi les nœuds.

Par exemple, une tâche au niveau du graphe peut consister en une classification de graphes (par exemple prédire le type du graphe à partir de sa structure).

Par exemple, une tâche au niveau des liens peut consister en une prédiction d'un ou plusieurs liens (par exemple prédire si un lien entre deux nœuds existe) ou - autre exemple - en une régression qui consiste à prédire une ou plusieurs valeurs de caractéristiques de sortie(s) d'un ou plusieurs liens.

Par exemple, une tâche au niveau des nœuds peut consister en une classification d'un ou plusieurs nœuds (par exemple prédire le type d'un nœud à partir de ses caractéristiques) ou - autre exemple - en une régression qui consiste à prédire une ou plusieurs valeurs de caractéristiques de sortie(s) d'un ou plusieurs nœuds.

Dans un ou plusieurs modes de réalisation, un (ou plusieurs) réseau(x) de neurones en graphe(s) peut avantageusement être utilisé pour appliquer une régression au niveau d'un ou plusieurs nœuds d'un réseau électrique à gérer auquel le réseau de neurones en graphe correspond par configuration du réseau de neurone en graphe sur la base de données de topologie (par exemple pour prédire les tensions d'un ou plusieurs des nœuds du réseau électrique considéré).

Selon le mode de réalisation choisi, l'apprentissage du (de chacun des) réseau(x) de neurones en graphe(s) utilisé(s) peut se faire d'une manière supervisée ou non supervisée.

Dans un ou plusieurs modes de réalisation, l'apprentissage supervisé peut comprendre : apprendre à un (ou plusieurs des) réseau(x) de neurones en graphe(s) utilisé(s) à produire, à partir d'une entrée, une sortie qui s'aligne avec une valeur cible (prédéterminée). Dans ce cas, la fonction objective à minimiser durant la phase d'apprentissage peut être définie sur la base d'un écart entre la sortie et la valeur cible.

Dans un ou plusieurs modes de réalisation, l'apprentissage non supervisé peut comprendre : apprendre un (ou plusieurs des) réseau(x) de neurones en graphe(s) utilisé(s) à produire, à partir d'une entrée, une sortie qui respecte une fonction objectif prédéfinie selon l'application considérée, en exploitant la structure du graphe, mais sans connaitre la valeur cible.

Dans un ou plusieurs modes de réalisation, le réseau neuronal en graphe utilisé peut être configuré avec un nombre $N_{gnn}$ de couches de réseau neuronal du réseau neuronal en graphe, chaque couche $i$ de réseau neuronal comprenant un ou plusieurs (par exemple $K$) réseaux de neurones $L(k, i)$ (avec $1 \leq k \leq K$ et $1 \leq i \leq N_{gnn}$). Par exemple, une couche de réseau neuronal comprenant un ou plusieurs (par exemple $K$) réseaux de neurones $L(k)$ (avec $1 \leq k \leq K$), dite (indifféremment) couche de base, couche modèle ou couche matrice, peut être dupliquée pour configurer le réseau neuronal en graphe avec $N_{gnn}$ de couches de réseau neuronal. Dans un ou plusieurs modes de réalisation, le nombre de couches du réseau neuronal en graphe peut être choisi sur la base d'un nombre $N$ de nœuds du réseau électrique.

Dans un ou plusieurs modes de réalisation, des données de topologie du réseau électrique à gérer comprenant un nombre $N$ de nœuds du réseau électrique peuvent être utilisées pour déterminer un nombre $N_{gnn}$ de couches de réseau neuronal à configurer. Par exemple, le nombre $N_{gnn}$ de couches de réseau neuronal à configurer peut être déterminé sur la base du nombre $N$ de nœuds du réseau électrique à représenter (par exemple $N_{gnn} \geq N$).

Par exemple, dans un ou plusieurs modes de réalisation, une couche de réseau neuronal comprenant un ou plusieurs (par exemple $K$) réseaux de neurones $L(k)$ (avec $1 \leq k \leq K$), dite (indifféremment) couche de base, couche modèle ou couche matrice, peut être dupliquée $N_{gnn}$ fois pour configurer le réseau neuronal en graphe avec $N_{gnn}$ de couches de réseau neuronal comprenant au moins $N$ couches de réseau neuronal correspondant respectivement à $N$ nœuds du réseau électrique à gérer.

Dans un ou plusieurs modes de réalisation dans lequel le réseau neuronal en graphe utilisé est de type à transmission de messages (par exemple de type MPGNN), chaque couche $i$ de réseau neuronal peut comprendre en outre un encodeur $E(i)$ configuré pour recevoir données d'entrée du réseau neuronal en graphe et couplé de manière opérationnelle à un premier parmi un ou plusieurs réseaux de neurones $L(k, i)$, et un décodeur $D(i)$ couplé de manière opérationnelle à un deuxième parmi les un ou plusieurs réseaux de neurones $L(k, i)$ et configuré pour produire en sortie des données de sortie du réseau neuronal en graphe.

Dans un ou plusieurs modes de réalisation dans lequel le réseau neuronal en graphe utilisé est de type à transmission de messages (par exemple de type MPGNN), chaque couche $i$ de réseau neuronal comprenant en outre un encodeur $E(i)$ configuré pour recevoir données d'entrée du réseau neuronal en graphe et couplé de manière opérationnelle à un parmi l'un ou plusieurs réseaux de neurones $L(k, i)$, et un décodeur $D(i)$ couplé de manière opérationnelle à un parmi les un ou plusieurs réseaux de neurones $L(k, i)$ et configuré pour produire en sortie des données de sortie du réseau neuronal en graphe, l'encodeur $E(i)$ peut comprendre un réseau de neurones totalement connecté configuré pour générer un message par encodage de données fournies en entrée de la couche $i$ du réseau neuronal en graphe, et le décodeur peut comprendre un réseau de neurones totalement connecté configuré pour générer des données de sortie de la couche $i$ du réseau neuronal en graphe par décodage d'un message reçu d'un réseaux de neurones de la couche $i$ du réseau neuronal en graphe.

Dans un ou plusieurs modes de réalisation, une phase d'apprentissage (20a) du réseau neuronal en graphe est effectuée sur la base de données respectivement représentatives de topologie d'un ou plusieurs réseaux électriques d'apprentissage (20a1).

Par exemple, dans un ou plusieurs modes de réalisation, la phase d'apprentissage peut être configurée pour effectuer un apprentissage non supervisé qui vise à produire des données de sortie qui respectent une ou plusieurs équations physiques du système électrique sur lequel l'apprentissage est effectué.

Dans les modes de réalisation dans lesquels des données représentatives de caractéristiques électrotechniques sont utilisées (par exemple dans les modes de réalisation dans lesquels le réseau neuronal en graphe est en outre configuré sur la base de données respectivement représentatives de caractéristiques électrotechniques du réseau électrique considéré), la phase d'apprentissage du réseau neuronal en graphe peut en outre être effectuée sur la base de données respectivement représentatives de caractéristiques électrotechniques des un ou plusieurs réseaux électriques d'apprentissage.

Dans un ou plusieurs modes de réalisation, une phase d'apprentissage d'un ou plusieurs des réseaux de neurones $L(k, i)$ d'au moins une couche $i$ du réseau neuronal en graphe (par exemple apprentissage d'un ou plusieurs réseaux neuronaux $L(k, i_b)$ de la couche de base $i_b$ peut être effectuée. Par exemple, dans un ou plusieurs modes de réalisation, une phase d'apprentissage des réseaux de neurones $\{L(k, i)\}_{1 \leq k \leq K}$ d'au moins une couche du réseau neuronal en graphe (par exemple d'un ou plusieurs réseaux neuronaux $L(k, i_b)$ de la couche de base $i_b$) peut être effectuée avant de générer (par exemple par duplication) les autres couches du réseau neuronal en graphe, pour obtenir un réseau neuronal en graphe dans lequel chaque couche $i$ de réseau neuronal comprends un ou plusieurs réseaux de neurones $L(k, i)$ entrainés.

Dans un ou plusieurs modes de réalisation dans lesquels une couche de réseau neuronal comprenant un ou plusieurs (par exemple $K$) réseaux de neurones $L(k)$ (avec $1 \leq k \leq K$), dite (indifféremment) couche de base, couche modèle ou couche matrice, est dupliquée $N_{gnn}$ fois pour configurer le réseau neuronal en graphe avec $N_{gnn}$ de couches de réseau neuronal comprenant au moins $N$ couches de réseau neuronal correspondant respectivement à $N$ nœuds du réseau électrique à gérer, la couche de réseau neuronal utilisée comme couche de base du réseau neuronal dupliquée $N_{gnn}$ fois peut avoir été préalablement entraînée lors d'une phase d'apprentissage effectuée en utilisant des données de réseaux électriques d'apprentissage.

Dans un ou plusieurs modes de réalisation, la phase d'apprentissage effectuée en utilisant des données de réseaux électriques d'apprentissage peut être configurée pour, sur chaque réseau d'apprentissage utilisé, dupliquer une couche de base de réseau neuronal (comprenant un ou plusieurs (par exemple $K$) réseaux de neurones $L(k)$ (avec $1 \leq k \leq K$)) un nombre de fois correspondant au nombre de nœuds du réseau électrique d'apprentissage considéré.

Le concept d'utilisation d'une couche de base de réseau neuronal (comprenant un ou plusieurs (par exemple $K$)

réseaux de neurones $L(k)$ (avec $1 \leq k \leq K$) et éventuellement un encodeur et un décodeur) dupliqué un nombre de fois correspondant à un nombre de nœuds du réseau électrique sur lequel le réseau neuronal en graphe est utilisé (ou, en fonction du mode de réalisation, d'un nombre de nœuds d'une représentation en graphe de ce réseau) peut ainsi être utilisé lors de l'une ou plusieurs parmi la phase d'apprentissage et la phase d'inférence d'utilisation du réseau neuronal en graphe.

Dans les modes de réalisation dans lesquels ce concept de duplication d'une couche de base est utilisé en phase d'apprentissage, on obtient avantageusement à l'issue de l'apprentissage sur un réseau électrique d'apprentissage un réseau neuronal en graphe constitué d'une pluralité de couches dupliquées comprenant les mêmes réseaux de neurones entraînés sur un réseau électrique d'apprentissage. Cela fournit avantageusement une couche de base de réseau neuronal comprenant des réseaux de neurones entraînés que l'on peut utiliser comme couche de base de réseau neuronal entraînée pour la dupliquer lors d'une phase d'inférence sur la base d'un nombre de nœuds du réseau électrique à gérer sur lequel le réseau neuronal en graphe entraîné est utilisé en phase d'inférence (ou, en fonction du mode de réalisation, d'un nombre de nœuds d'une représentation en graphe de ce réseau).

Dans un ou plusieurs modes de réalisation dans lequel le réseau neuronal en graphe utilisé est de type à transmission de messages (par exemple de type MPGNN), chaque couche $i$ de réseau neuronal comprenant en outre un encodeur $E(i)$ configuré pour recevoir données d'entrée du réseau neuronal en graphe et couplé de manière opérationnelle à un parmi l'un ou plusieurs réseaux de neurones $L(k, i)$, et un décodeur $D(i)$ couplé de manière opérationnelle à un parmi les un ou plusieurs réseaux de neurones $L(k, i)$ et configuré pour produire en sortie des données de sortie du réseau neuronal en graphe, une phase d'apprentissage d'un ou plusieurs des réseaux de neurones d'au moins une couche $i$ du réseau neuronal en graphe (par exemple apprentissage d'un ou plusieurs réseaux neuronaux $L(k, i_b)$ de la couche de base $i_b$) peut être effectuée. Par exemple, dans un ou plusieurs modes de réalisation, une phase d'apprentissage des réseaux de neurones $\{L(k, i)\}_{1 \leq k \leq K}$ d'au moins une couche du réseau neuronal en graphe (par exemple d'un ou plusieurs réseaux neuronaux $L(k, i_b)$ de la couche de base $i_b$) peut être effectuée avant de générer (par exemple par duplication) les autres couches du réseau neuronal en graphe, pour obtenir un réseau neuronal en graphe dans lequel chaque couche $i$ de réseau neuronal comprends l'encodeur $E(i)$, un ou plusieurs réseaux de neurones $L(k, i)$ entrainés, et le décodeur $D(i)$.

Dans un ou plusieurs modes de réalisation, la configuration des réseaux encodeurs et décodeurs peut aussi être effectué en utilisant un apprentissage. Ainsi, dans un ou plusieurs modes de réalisation, une phase d'apprentissage d'un ou plusieurs parmi les réseaux neuronaux encodeur $E(i)$ et décodeur $D(i)$ d'une ou plusieurs couches du réseau neuronal en graphe peut être effectuée, de manière à configurer les réseaux neuronaux encodeurs $E(i)$ pour recevoir en entrée des données de mesures de tension, et à configurer les réseaux neuronaux décodeurs $D(i)$ pour produire en sortie des données d'estimation des amplitudes de tensions.

Par exemple, dans un ou plusieurs modes de réalisation, une phase d'apprentissage des réseaux neuronaux encodeur $E(i)$ et décodeur $D(i)$ de chaque couche du réseau neuronal en graphe peut être effectuée. Avantageusement, dans certains modes de réalisation, une phase d'apprentissage des réseaux neuronaux encodeur $E(i_b)$ et décodeur $D(i_b)$ de la couche de base $i_b$ peut être effectuée avant de générer (par exemple par duplication) les autres couches du réseau neuronal en graphe, pour obtenir un réseau neuronal en graphe dans lequel chaque couche $i$ de réseau neuronal comprends un réseau neuronal encodeur $E(i)$ entrainé, un réseau neuronal décodeur $D(i)$ entrainé (ainsi que, dans certains modes de réalisation dans lesquels un ou plusieurs des réseaux de neurones $L(k, i)$ de la couche $i$ ont été entrainés, un ou plusieurs réseaux de neurones $L(k, i)$ entrainés).

Dans un ou plusieurs modes de réalisation dans lesquels une ou plusieurs de ces phases d'apprentissage sont mises en œuvre, une ou plusieurs de ces phases d'apprentissage sont effectuées sur la base (en utilisant) des données représentatives de topologies respectives d'un ou plusieurs réseaux électriques à partir desquels un ou plusieurs apprentissages sont effectués (dénommés dans la présente divulgation réseaux électriques d'apprentissage).

Ainsi, dans un ou plusieurs modes de réalisation, on utilise les données d'un ou plusieurs réseaux électriques d'apprentissage pour constituer une base de données utilisée pendant la phase d'apprentissage d'un ou plusieurs des réseaux de neurones du modèle de réseau neuronal en graphe utilisé.

Dans un ou plusieurs modes de réalisation, la phase d'apprentissage peut utiliser un ou plusieurs réseaux électriques d'apprentissage, par exemple choisis parce que présentant des topologies typiques distinctes ou d'autres caractéristiques pertinentes distinctes, afin d'enrichir la base de données d'apprentissage.

Par exemple, dans un ou plusieurs modes de réalisation, on effectue un apprentissage hors ligne sur une base de données constituées des historiques de mesures (par exemple comprenant des mesures d'amplitude de tension sur un ou plusieurs nœuds du réseau électrique d'apprentissage) pour $N_{rés}$ réseaux électriques d'apprentissage sur une période de temps $T$ prédéterminée (par exemple de quelques mois), avec un pas de temps $\Delta t$ de mesure prédéterminé : des mesures (par exemple comprenant des mesures d'amplitude de tension sur un ou plusieurs nœuds d'un réseau électrique d'apprentissage) sont effectuées sur chacun des un ou plusieurs réseaux électriques d'apprentissage tous les $\Delta t$ d'une première unité de temps pendant une durée de $T$ d'une deuxième unité de temps, de manière à générer une base de données d'apprentissage.

Le nombre d'échantillons de mesure obtenus pour chaque réseau électrique d'apprentissage peut alors être déterminé par : $N_t = \frac{T \times 24 \times 60}{\Delta t}$ , où $T$ est la période en cours de l'historique considéré et $\Delta t$ est le pas de temps en minutes.

Le nombre total des échantillons constituant la base de données d'apprentissage est alors : $N_{éch} = N_{rés} \times N_t$.

La figure 4 illustre un exemple de constitution (30) d'une base de données d'apprentissage pouvant être mise en œuvre dans un ou plusieurs modes de réalisation.

La figure 4 illustre un ensemble (30a) de $N_{rés}$ réseaux d'apprentissage sur lesquels des mesures peuvent être effectuées dans un ou plusieurs modes de réalisation pour constituer une base de données d'apprentissage.

Dans l'exemple illustré sur la figure 4, $N_t$ échantillons de mesures (30b) sont collectés pour chacun des $N_{rés}$ réseaux électriques d'apprentissage, ce qui permet de constituer dans un ou plusieurs modes de réalisation une base de données d'apprentissage (30c) comprenant $N_{éch} = N_{rés} \times N_t$ échantillons. Un échantillon de la base de données d'apprentissage correspond alors aux données d'un parmi les $N_{rés}$ réseaux électriques d'apprentissage qui ont été collectées à un certain instant de mesure.

Dans un ou plusieurs modes de réalisation, des données représentatives d'une topologie de réseau peuvent être collectées (1.1) pour un ou plusieurs des un ou plusieurs réseaux électriques d'apprentissage (20a1). Par exemple, dans certains modes de réalisation, des données représentatives de topologie de réseau peuvent être collectées pour chacun des un ou plusieurs réseaux électriques d'apprentissage.

Dans un ou plusieurs modes de réalisation, les données représentatives de topologie peuvent comprendre un ou plusieurs parmi des données représentatives des nœuds du réseau électrique (ici le réseau électrique d'apprentissage) et des données représentatives des liaisons du réseau électrique. Par exemple, dans certains modes de réalisation, les données représentatives des nœuds du réseau électrique peuvent comprendre une liste des nœuds du réseau électrique, par exemple numérotés de 1 à $M$. Par exemple, dans certains modes de réalisation, les données représentatives des liaisons du réseau électrique peuvent comprendre une matrice de dimension $N_{liaisons} \times 2$, par exemple constituée des indices des deux nœuds des deux extrémités des $N_{liaisons}$ liaisons du réseau électrique.

La figure 5a illustre un exemple simplifié de réseau électrique (31).

Le réseau électrique (31) de la figure 5a comprend 3 nœuds 31a_1, 31a_2 et 31a_3 connectés (couplés) électriquement par 2 liaisons 31b_1 et 31b_2 : une première liaison électrique 31b_1 entre les nœuds 31a_1 et 31a_2, et une deuxième liaison électrique 31b_2 entre les nœuds 31a_1 et 31a_3.

Dans le cas du réseau électrique (31) de la figure 5 comprenant 3 nœuds et 2 liaisons, les données représentatives des liaisons du réseau électrique peuvent comprendre la matrice de dimension $2 \times 2$ suivante : $\begin{pmatrix} 1 & 2 \\ 1 & 3 \end{pmatrix}$ , qui représente les liaisons du réseau électrique (31) selon le tableau suivant :

|  | Nœud | |
|---|---|---|
| Liaison 1 - 2 | 1 | 2 |
| Liaison 1 - 3 | 1 | 3 |

Dans un ou plusieurs modes de réalisation, des données de mesures sont collectées (1.3) sur un ou plusieurs des un ou plusieurs réseaux électriques d'apprentissage, par exemple en effectuant des mesures sur ces un ou plusieurs réseaux d'apprentissage. Dans certains modes de réalisation, des données de mesures sont collectées sur chacun des un ou plusieurs réseaux électriques d'apprentissage, par exemple en effectuant des mesures sur chacun de ces un ou plusieurs réseaux d'apprentissage.

Dans un ou plusieurs modes de réalisation, les mesures effectuées peuvent comprendre des mesures de tension (par exemple comprenant des mesures d'amplitudes de tension) effectuées sur un ou plusieurs des nœuds des un ou plusieurs des réseaux électriques d'apprentissage. Dans certains modes de réalisation, les mesures effectuées peuvent comprendre des mesures de tension (par exemple comprenant des mesures d'amplitudes de tension) effectuées sur chacun des nœuds des un ou plusieurs des réseaux électriques d'apprentissage.

Dans un ou plusieurs modes de réalisation, les mesures effectuées peuvent en outre comprendre un ou plusieurs parmi des mesures de puissance active et des mesures de puissance réactive des trois phases effectuées sur un ou plusieurs des nœuds des un ou plusieurs des réseaux électriques d'apprentissage. Dans certains modes de réalisation, les mesures effectuées peuvent en outre comprendre un ou plusieurs parmi des mesures de puissance(s) active(s) et des mesures de puissance(s) réactive(s) d'une ou plusieurs des trois phases effectuées sur chacun des nœuds des un ou plusieurs des réseaux électriques d'apprentissage.

Dans des modes de réalisation dans lesquels de données respectivement représentatives de caractéristiques électrotechniques du réseau électrique considéré sont utilisées (1.2) (par exemple le réseau neuronal en graphe peut en outre être configuré sur la base de données respectivement représentatives de caractéristiques électrotechniques du réseau électrique considéré), des données représentatives de caractéristiques électrotechniques peuvent être collectées pour un ou plusieurs des un ou plusieurs réseaux électriques d'apprentissage. Par exemple, dans certains modes de réalisation, des données représentatives de caractéristiques électrotechniques peuvent être collectées pour chacun des un ou plusieurs réseaux électriques d'apprentissage.

Dans un ou plusieurs modes de réalisation, les données représentatives de caractéristiques électrotechniques peuvent comprendre, pour un réseau d'apprentissage comprenant $M$ nœuds, une matrice d'admittance $Y$ (qui est une matrice complexe $N_{ph}M \times N_{ph}M$). Dans certains modes de réalisation, la matrice d'admittance peut relier les courants aux tensions de $N_{ph}$ phases parmi les 4 phases (les trois phases et le neutre) ($1 \leq N_{ph} \leq 4$) des $M$ nœuds du réseau. En fonction du mode de réalisation, la matrice d'admittance peut être prédéterminée, ou être déterminée à partir de données fournies par le gestionnaire du réseau de distribution et permettant de la construire.

Dans un ou plusieurs modes de réalisation, les données collectées sur un ou plusieurs des un ou plusieurs réseaux d'apprentissage (comprenant des données de topologie et des données de mesures de tension V effectuées sur des nœuds, et éventuellement dans certains modes de réalisation un ou plusieurs parmi des données de mesures de puissance(s) active(s) P et des mesures de puissance(s) réactive(s) Q d'une ou plusieurs des trois phases sur ces nœuds et des données de paramètres électrotechniques) peuvent être utilisées (20a2-1, 20a2-2, 20a2-3) pour construire une représentation en graphe d'un ou plusieurs échantillons (de chaque échantillon) de la base de données.

Ainsi, dans un ou plusieurs modes de réalisation, la présente divulgation prévoit un apprentissage (1.4) d'au moins une couche d'un réseau neuronal en graphe (20a3) (comme par exemple le réseau neuronal en graphe illustré par la Figure 3) en utilisant une base de données d'apprentissage constituée à partir de données de topologie et de données de mesures effectuées sur un ou plusieurs réseaux électriques d'apprentissage.

Avantageusement, du fait de l'utilisation d'un réseau neuronal en graphe configurable en fonction de données de topologie d'un réseau d'application, cet apprentissage du réseau neuronal en graphe peut être utilisé lors d'une phase d'inférence appliquée à un réseau électrique d'application sans nécessiter que ce réseau d'application ait une topologie identique ou similaire, ou une taille identique ou similaire, à celles d'un ou plusieurs des réseaux électriques d'apprentissage. Le procédé proposé permet donc avantageusement d'effectuer une phase d'inférence, éventuellement en temps réel (ou quasi-temps réel) sur tout réseau électrique, grâce à l'utilisation d'un réseau neuronal en graphe configuré et entraîné selon un mode de réalisation de la présente divulgation, en utilisant des mesures effectuées sur un sous-ensemble du réseau électrique (et non pas sur la totalité ou quasi-totalité des nœuds de ce réseau). La mise en œuvre du procédé proposé n'est donc pas limitée à un réseau électrique ou un type de réseau électrique (de topologie ou de taille similaires) utilisé pour effectuer l'apprentissage d'une ou plusieurs des couches du réseau neuronal en graphe.

Dans un ou plusieurs modes de réalisation, le procédé proposé utilise une architecture de réseaux de neurones en graphe (en anglais, « Graph Neural Network », ou « GNN »), qui permet avantageusement de représenter les interactions entre les différents nœuds du réseau électrique considéré (par exemple par configuration du réseau de neurones en graphe sur la base de données de topologie du réseau électrique considéré). Dans certains modes de réalisation, une phase d'apprentissage (1) du réseau de neurones en graphe peut être effectuée, en utilisant des données de topologie (20a2-1) d'un ou plusieurs réseaux d'apprentissage (20a1) et des données de mesures (20a2-3) ((d'amplitudes) de tensions) effectuées sur les un ou plusieurs réseaux d'apprentissage. Dans certains modes de réalisation, l'utilisation (en sus de données de topologie (20a2-1) et de données de mesures (20a2-3)) de données représentatives de caractéristiques électrotechniques (20a2-2) peut avantageusement permettre d'effectuer un apprentissage qui vise à pénaliser la violation de lois physiques.

Dans un ou plusieurs modes de réalisation, une phase d'inférence (2) est effectuée durant laquelle le modèle (20b3) (réseau neuronal en graphe) est utilisé sur le réseau électrique considéré (20b1) pour déterminer une estimation (20b4) des amplitudes des tensions des nœuds du réseau électrique considéré, à partir de données d'entrée comprenant des mesures de tension (20b2-3) effectuées (2.3) sur un sous-ensemble de nœuds du réseau électrique considéré (typiquement quelques nœuds seulement du réseau électrique considéré, le sous-ensemble de nœuds comprenant un nombre de nœuds étant sensiblement inférieur au nombre total de nœuds du réseau électrique considéré). Dans un ou plusieurs modes de réalisation, le procédé proposé peut avantageusement être mis en œuvre en temps réel ou quasi-temps réel, dans les cas où les mesures de tension sont remontées en temps réel ou quasi-temps réel, et l'estimation est déterminée en temps réel ou quasi-temps réel.

Dans un ou plusieurs modes de réalisation, le modèle (réseau neuronal en graphe) peut avoir été entrainé (par exemple en effectuant une phase d'apprentissage) préalablement à et/ou en parallèle de la phase d'inférence lors d'une phase d'apprentissage (1). Par exemple, dans un ou plusieurs modes de réalisation, le modèle entraîné précédemment sur un ou plusieurs ($N_{rés}$) réseaux électriques d'apprentissage (20a1) (par exemple de taille $M$ (comprenant $M$ nœuds)) peut être appliqué sur un réseau électrique (d'application) (20b1) (par exemple de taille $M'$ différente de $M$) pour déterminer (2.4) une estimation (20b4) des amplitudes des tensions des nœuds de ce réseau (20b1) en utilisant comme données d'entrée des mesures (20b2-3) de tension effectuées (2.3) sur un nombre de nœuds de ce réseau qui est (significativement) inférieur au nombre total de nœuds du réseau (20b1) (d'application) (par exemple remontées en temps réel ou quasi-temps réel). Le procédé proposé permet donc avantageusement d'éviter d'une part la prise de mesure sur tous les nœuds du réseau électrique considéré (en utilisant au contraire avantageusement un nombre de nœuds sur lesquels des mesures sont effectuées qui peut être petit devant le nombre total de nœuds du réseau), ce qui peut être particulièrement long et complexe, mais aussi d'autre part l'utilisation d'un réseau de neurones spécifiquement configuré pour le réseau électrique configuré. Une fois le réseau neuronal en graphe entraîné sur un ou plusieurs réseaux électriques d'apprentissage, ce réseau neuronal en graphe peut avantageusement être configuré sur la base de données de topologie (20b2-1) du réseau électrique considéré (20b1), puis être appliqué sur ce réseau (20b1) en n'utilisant des mesures de tension (20b2-3) effectuées (2.3) sur des nœuds de ce réseau dont le nombre est (significativement) inférieur au nombre total de nœuds du réseau (20b1) pour générer (2.4) une estimation (20b4) des amplitudes de tensions pour tous les nœuds de ce réseau. Le procédé proposé présente ainsi un caractère hybride, en ce qu'il utilise un réseau neuronal (mais qui n'est pas spécifiquement entraîné sur le réseau électrique considéré) ainsi que des mesures de tension effectuées sur le réseau électrique considéré (mais sur un (faible) nombre de nœuds (possiblement très) inférieur au nombre total de nœuds du réseau).

Dans un ou plusieurs modes de réalisation, des données (20b2-1) représentatives d'une topologie de réseau peuvent être collectées (2.1) pour le réseau électrique considéré (20b1), et fournies au réseau neuronal en graphe (20b3) pour configuration, éventuellement après transcodage.

Dans un ou plusieurs modes de réalisation, les données (20b2-1) représentatives de topologie peuvent comprendre un ou plusieurs parmi des données représentatives des nœuds du réseau électrique considéré et des données représentatives des liaisons du réseau électrique considéré. Par exemple, dans certains modes de réalisation, les données représentatives des nœuds du réseau électrique peuvent comprendre une liste des nœuds du réseau électrique considéré, par exemple numérotés de 1 à M'. Par exemple, dans certains modes de réalisation, les données représentatives des liaisons du réseau électrique peuvent comprendre une matrice de dimension $N'_{liaisons} \times 2$, par exemple constituée des indices des deux nœuds des deux extrémités des $N'_{liaisons}$ liaisons du réseau électrique.

Avantageusement, dans un ou plusieurs modes de réalisation, les données de topologie de réseau collectées pour le réseau électrique considéré (phase d'inférence) et pour un ou plusieurs des réseaux d'apprentissage utilisés (phase d'apprentissage) pourront être au même format ou dans un format similaire. Le réseau électrique (31) de la figure 5a et l'exemple de données représentatives de liaisons est applicable à tout réseau électrique, qu'il s'agisse du réseau électrique considéré ou d'un réseau électrique d'apprentissage.

Dans un ou plusieurs modes de réalisation, des données (20b2-3) de mesures sont collectées (2.3) sur le réseau électrique considéré (20b1), par exemple en effectuant des mesures sur un sous-ensemble de nœuds de ce réseau (20b1) comprenant un nombre de nœuds (possiblement très) inférieur au nombre total de nœuds de ce réseau (20b1).

Dans un ou plusieurs modes de réalisation, les mesures effectuées peuvent comprendre des mesures de tension (par exemple comprenant des mesures d'amplitudes de tension) effectuées sur un sous-ensemble de nœuds du réseau électrique considéré, comprenant typiquement un nombre de nœuds petit devant le nombre total de nœuds du réseau électrique considéré. Dans certains modes de réalisation, ces mesures peuvent être effectuées en temps réel ou quasi-temps réel.

Dans un ou plusieurs modes de réalisation, les mesures effectuées peuvent en outre comprendre un ou plusieurs parmi des mesures de puissance(s) active(s) et des mesures de puissance(s) réactive(s) sur une ou plusieurs des trois phases effectuées sur le sous-ensemble de nœuds du réseau électrique considéré.

Par exemple, dans un ou plusieurs modes de réalisation, les mesures effectuées sur le sous-ensemble de nœuds du réseau électrique considéré peuvent comprendre des mesures des amplitudes de tension, et éventuellement dans certains modes de réalisation des mesures des puissances actives et des puissances réactives d'une ou plusieurs des trois phases d'un ou plusieurs parmi : le secondaire du transformateur HTA/BT envisagé comme un nœud du réseau électrique considéré (dans les modes de réalisation dans lesquels le secondaire du transformateur HTA/BT est instrumenté en capteurs de mesures, par exemple capables de remonter des mesures en temps réel ou quasi-temps réel) et un nombre prédéterminé de nœuds du réseau d'un autre type (par exemple des nœuds équipés de compteur électriques intelligents capables de remonter des mesures en temps réel ou quasi-temps réel). Le procédé proposé peut avantageusement être mis en œuvre avec un faible nombre de ces compteurs (en comparaison du nombre total de compteurs du réseau), ce qui permet de surmonter les contraintes de communication qui peuvent se poser sur certains réseaux avec ces compteurs intelligents.

Dans des modes de réalisation dans lesquels des données respectivement représentatives de caractéristiques électrotechniques du réseau électrique considéré sont utilisées (par exemple le réseau neuronal en graphe peut en outre être configuré sur la base de données respectivement représentatives de caractéristiques électrotechniques du réseau électrique considéré), des données (20b2-2) représentatives de caractéristiques électrotechniques peuvent être collectées (2.2) pour le réseau électrique considéré (20b1).

Dans un ou plusieurs modes de réalisation, les données représentatives de caractéristiques électrotechniques peuvent comprendre, pour un réseau électrique considéré comprenant M' nœuds, une matrice d'admittance $Y'$ (qui est une matrice complexe $N_{ph}M' \times N_{ph}M'$). Dans certains modes de réalisation, la matrice d'admittance peut relier les courants aux tensions de $N_{ph}$ phases parmi les 4 phases (les trois phases et le neutre) ($1 \leq N_{ph} \leq 4$) des M' nœuds du réseau électrique considéré. En fonction du mode de réalisation, la matrice d'admittance peut être prédéterminée, ou être déterminée à partir de données fournies par le gestionnaire du réseau de distribution et permettant de la construire.

Dans un ou plusieurs modes de réalisation, des données relatives au (de description du) réseau électrique considéré (20b1) comprenant des données de topologie (20b2-1) du réseau électrique considéré peuvent être utilisées pour construire (2.4) une représentation en graphe du réseau électrique considéré, ce qui permet, dans un ou plusieurs modes de réalisation, de configurer un réseau neuronal en graphe en utilisant une ou plusieurs couches de réseau neuronal (par exemple tel qu'illustrées par la Figure 3) sur la base des données de topologie (20b2-1) du réseau électrique considéré.

Dans un ou plusieurs modes de réalisation, une fois configuré sur la base des données représentatives de topologie du réseau électrique considéré (20b1), le réseau neuronal en graphe (20b3), entraîné dans certains modes de réalisation selon une phase d'apprentissage (1), détermine (2.4) (lors d'une phase d'inférence) une estimation (20b4) des amplitudes de tensions respectives des nœuds de l'ensemble de nœuds sur la base des données de mesures de tension (20b2-3) des nœuds du sous-ensemble de nœuds. Dans les modes de réalisation dans lesquels des données (20b2-2) de paramètres électrotechniques sont en outre utilisées pour la configuration du réseau neuronal en graphe, la détermination (2.4) (en phase d'inférence) de l'estimation (20b4) des amplitudes de tensions respectives des nœuds de l'ensemble de nœuds peut en outre être effectuée sur la base de mesures de puissance(s) active(s) et des mesures de puissance(s) réactive(s) d'une ou plusieurs des trois phases sur les nœuds du sous-ensemble de nœuds (données comprises dans les données de mesure (20b2-3) remontées (dans certains modes de réalisation en temps réel (ou quasi-temps réel)) vers le réseau neuronal en graphe.

Avantageusement, des modes de réalisation de la présente divulgation utilisent une représentation par réseau neuronal en graphe des structures de données complexes correspondant à un ou plusieurs réseaux électriques gérés selon le schéma proposé.

Selon le mode de réalisation, une représentation en graphe peut être appliquée à un ou plusieurs (voire à tous les) échantillons de la base de données d'apprentissage ainsi qu'à un ou plusieurs (voire à tous les) échantillons du réseau électrique considéré (réseau électrique de l'application temps réel). Comme indiqué en lien avec la Figure 4, un échantillon de la base de données d'apprentissage correspond alors aux données d'un parmi les $N_{rés}$ réseaux électriques d'apprentissage qui ont été collectés à un certain instant de mesure :

Dans un ou plusieurs modes de réalisation, les données collectées lors d'une ou plusieurs parmi la collecte des données topologiques des réseaux d'apprentissage, la collecte des historiques de mesures des réseaux d'apprentissage et la collecte de paramètres électrotechniques des réseaux d'apprentissage peuvent être organisées selon une structure prédéfinie de réseau neuronal en graphe. Les données collectées sur les réseaux d'apprentissage peuvent être ainsi transformées en graphe.

Dans un ou plusieurs modes de réalisation, les données collectées lors d'une ou plusieurs parmi la collecte des données topologiques du réseau électrique considéré, la collecte des historiques de mesures (mesures éventuellement collectées en temps réel (ou quasi-temps réel)) du réseau électrique considéré et la collecte de paramètres électrotechniques du réseau électrique considéré peuvent être organisées selon une structure prédéfinie de réseau neuronal en graphe. Les données collectées sur le réseau électrique considéré peuvent ainsi elles aussi être transformées en graphe.

Dans un ou plusieurs modes de réalisation, les données collectées pour un réseau électrique à représenter (réseau d'apprentissage ou réseau électrique considéré) peuvent être utilisées pour configurer un réseau neuronal en graphe.

Par exemple, dans un ou plusieurs modes de réalisation, les données représentatives de topologie peuvent être utilisées pour configurer un graphe $G = (V, E)$ représentatif du réseau électrique à représenter, dans lequel $V$ est un ensemble de nœuds du réseau électrique à représenter et $E$ est un ensemble de connections entre les nœuds du réseau électrique à représenter. Les données des ensemble $V$ et $E$ peuvent être obtenues sur la base des données représentatives de topologie du réseau électrique à représenter.

Dans un ou plusieurs modes de réalisation, les données représentatives de topologie du réseau électrique qui sont utilisées pour configurer le réseau neuronal en graphe sont comprises dans une structure de données correspondant à une représentation en graphe $G = (V, E)$ du réseau électrique, dans lequel $V$ désigne un ensemble de nœuds du graphe représentant respectivement des nœuds du réseau électrique et $E$ désigne un ensemble de connexions du graphe représentant respectivement des connexions électriques entre les nœuds du réseau électrique. Dans ces modes de réalisation le réseau neuronal en graphe peut être configuré en établissant des correspondances respectives entre un ou plusieurs parmi les nœuds de l'ensemble $V$ du graphe et les couches de réseau neuronal du réseau neuronal en graphe et les connexions de l'ensemble $E$ du graphe et les connexions neuronales du réseau neuronal en graphe.

Dans un ou plusieurs modes de réalisation, le réseau neuronal en graphe utilisé peut être configuré avec un nombre $N_{gnn}$ de couches de réseau neuronal du réseau neuronal en graphe, chaque couche $i$ de réseau neuronal comprenant un ou plusieurs (par exemple $K$) réseaux de neurones $L(k, i)$ (avec $1 \le k \le K$ et $1 \le i \le N_{gnn}$), le nombre $N_{gnn}$ étant déterminé sur la base d'un nombre de nœuds d'un graphe $G = (V, E)$ représentant le réseau électrique. Par exemple, une couche de réseau neuronal comprenant un ou plusieurs (par exemple $K$) réseaux de neurones $L(k)$ (avec $1 \le k \le K$), dite (indifféremment) couche de base, couche modèle ou couche matrice, peut être dupliquée pour configurer le réseau neuronal en graphe avec $N_{gnn}$ de couches de réseau neuronal, le nombre $N_{gnn}$ étant déterminé sur la base d'un nombre de nœuds d'un graphe $G = (V, E)$ représentant le réseau électrique.

Dans un ou plusieurs modes de réalisation, des données de topologie du réseau électrique à gérer qui sont utilisées pour configurer le réseau neuronal en graphe peuvent être comprises dans une structure de données correspondant à une représentation en graphe $G = (V, E)$ du réseau électrique, le nombre de nœuds du graphe correspondant au nombre $N$ de nœuds du réseau électrique, peuvent être utilisées pour déterminer un nombre $N_{gnn}$ de couches de réseau neuronal à configurer. Par exemple, le nombre $N_{gnn}$ de couches de réseau neuronal à configurer peut être déterminé sur la base du nombre $N$ de nœuds du réseau électrique à représenter (par exemple $N_{gnn} \ge N$) par l'intermédiaire du nombre de nœuds d'une structure de données en graphe $G = (V, E)$ représentant le réseau électrique à gérer.

Dans un ou plusieurs modes de réalisation, un nœud du graphe $G$ peut être configuré pour représenter une ou plusieurs phases de ce nœud (par exemple les 3 phases de ce nœud).

Dans un ou plusieurs modes de réalisation, des caractéristiques électrotechniques d'une ou plusieurs liaisons du réseau électrique à représenter peuvent être représentées, pour une liaison $(\alpha, \beta) \in E$ entre les nœuds d'indice $\alpha$ et $\beta$ de l'ensemble $V$, par une matrice $A = (A_{\alpha\beta})_{\alpha,\beta \in [M]}$ comprenant les parties réelle ($Y_{re_\alpha}$) et imaginaire ($Y_{im_\beta}$) de la matrice admittance $4 \times 4$ correspondant aux indices $\alpha$ et $\beta$ : $A_{\alpha\beta} = [Y_{re_{\alpha\beta}} \ Y_{im_{\alpha\beta}}]$. Dans un ou plusieurs modes de réalisation, la dimension des caractéristiques électrotechniques d'une liaison peut ainsi être : $d_A = 4 \times 4 + 4 \times 4 = 32$.

Dans un ou plusieurs modes de réalisation, des caractéristiques électrotechniques d'un ou plusieurs nœuds du réseau électrique à représenter peuvent être représentées, pour un nœud d'indice $\alpha \in V$, par une matrice $B = (B_\alpha)_{\alpha \in [M]}$ comprenant une ou plusieurs des mesures (des amplitudes) de tensions ($V_\alpha$), de puissance active ($P_\alpha$) et de puissance réactive ($Q_\alpha$) d'une ou plusieurs phases ($a_n$, $b_n$ et $c_n$) (par exemple des trois phases) mesurées par rapport au neutre (n) :

$$B_\alpha = \begin{bmatrix} V_\alpha^{an} & P_\alpha^{an} & Q_\alpha^{an} & V_\alpha^{bn} & P_\alpha^{bn} & Q_\alpha^{bn} & V_\alpha^{cn} & P_\alpha^{cn} & Q_\alpha^{cn} \end{bmatrix}$$

. Dans un ou plusieurs modes de réalisation, la dimension des caractéristiques électrotechniques d'un nœud peut ainsi être : $d_B = 9$.

Dans les modes de réalisation dans lesquels le schéma proposé dans la présente divulgation est mis en œuvre en temps réel (ou, selon le mode de réalisation, quasi-temps réel), il est possible que la matrice $B$ correspondant à un nœud du réseau électrique à représenter présente des valeurs manquantes du fait de problèmes de remontée de mesures en temps réel (ou, selon le mode de réalisation, quasi-temps réel).

Dans un ou plusieurs modes de réalisation, des données de sortie (par exemple représentant des caractéristiques électrotechniques) correspondant à un des nœuds du réseau électrique à représenter peuvent être représentées, pour un nœud d'indice $\alpha \in V$, par une matrice $U = (U_\alpha)_{\alpha \in [M]}$ comprenant les parties réelle et imaginaire des tensions d'une ou plusieurs phases (par exemple des trois phases) par rapport au neutre $(V_{\alpha_{re}}^{an} \ V_{\alpha_{im}}^{an} \ V_{\alpha_{re}}^{bn} \ V_{\alpha_{im}}^{bn} \ V_{\alpha_{re}}^{cn} \ V_{\alpha_{im}}^{cn})$ . et de la tension du neutre par rapport à la terre $(V_{\alpha_{re}}^{nt} \quad V_{\alpha_{im}}^{nt})$ : $U_\alpha = \begin{bmatrix} V_{\alpha_{re}}^{an} & V_{\alpha_{im}}^{an} & V_{\alpha_{re}}^{bn} & V_{\alpha_{im}}^{bn} & V_{\alpha_{re}}^{cn} & V_{\alpha_{im}}^{cn} & V_{\alpha_{re}}^{nt} & V_{\alpha_{im}}^{nt} \end{bmatrix}$ . Dans un ou plusieurs modes de réalisation, la dimension des caractéristiques électrotechniques des sorties correspondant à un nœud peut ainsi être : $d_U = 8$.

Dans un ou plusieurs modes de réalisation, le procédé proposé prévoit d'effectuer une phase d'apprentissage du réseau neuronal en graphe une fois configuré, la phase d'apprentissage étant configurée pour pénaliser la violation de lois physiques. Dans ces modes de réalisation, un format de représentation des données de sorties comprenant les parties réelles et imaginaires des quatre tensions (les trois phases et le neutre) (tel qu'illustré cidessus) peut avantageusement être utilisé afin d'exprimer des équations physiques correspondant aux lois physiques pour lesquelles on souhaite entraîner le réseau neuronal en graphe. Dans un ou plusieurs modes de réalisation, des données de sorties organisées selon ce format de représentation peuvent être utilisées pour effectuer un apprentissage du réseau neuronal en graphe configuré pour pénaliser la violation de lois physiques.

Dans un ou plusieurs modes de réalisation, les représentations utilisées des données d'entrée et de sortie d'un nœud du réseau électrique à représenter peuvent être configurées en incluant les données de tensions du neutre par rapport à la terre dans la représentation des données de sorties, sans inclure ces données de tensions du neutre par rapport à la terre dans la représentation des données d'entrée). Par exemple, dans un ou plusieurs modes de réalisation, les tensions du neutre par rapport à la terre figurent uniquement dans les données de sorties.

Par conséquent, avantageusement, dans un ou plusieurs modes de réalisation, des mesures de ces tensions (du neutre) ne sont pas requises comme données d'entrée, ce qui s'accorde avec le fait qu'en pratique le neutre n'est pas souvent mesuré.

Dans un ou plusieurs modes de réalisation, des estimations de tensions du neutre peuvent être obtenues en sortie du réseau neuronal en graphe, et être utilisées dans les équations physiques que l'on souhaite respecter durant la phase d'apprentissage, ce qui permet avantageusement d'utiliser pour la phase d'apprentissage du réseau neuronal en graphe des équations physiques qui utilise les 4 phases (dont le neutre), qui permettent avantageusement de prendre en compte un éventuel déséquilibre entre les 3 phases dans la définition des lois physiques à respecter.

Dans les modes de réalisation dans lesquels le réseau neuronal en graphe n'est pas configuré pour générer en sortie des estimations de tensions du neutre, on pourra utiliser pour la phase d'apprentissage du réseau neuronal en graphe des équations physiques qui utilise parmi les 4 phases uniquement les 3 phases autres que le neutre. Pour passer d'équations physiques qui utilisent les 4 phases à des équations physiques qui n'utilisent pas le neutre, on pourra considérer dans un ou plusieurs modes de réalisation l'hypothèse que le système est équilibré. Cependant, dans la mesure où certains réseaux BT peuvent être déséquilibrés, cette approximation pourra éventuellement dégrader les performances du procédé proposé.

La Figure 5b illustre un exemple de représentation en graphe obtenu pour un exemple de réseau électrique (40a-4) (correspondant à l'exemple de réseau (31) illustré par la Figure 5a) comprenant 3 nœuds et deux liaisons (une liaison entre les nœuds 1 et 2 et une liaison entre les nœuds 1 et 3).

Dans un ou plusieurs modes de réalisation, l'architecture du réseau neuronal en graphe utilisée peut comprendre $N$ couches de réseau neuronal, chaque couche $i = 1, \ldots, N$ de réseau neuronal comprenant un encodeur $E$ configuré pour effectuer un encodage, un ou plusieurs réseaux de neurones $L(k, i)$ (d'indices $k$) configurés pour réaliser une propagation de messages, et un décodeur $D$ configuré pour effectuer un décodage. L'architecture du réseau neuronal en graphes peut ainsi comprendre une partie encodage comprenant les encodeurs respectifs de chaque couche, une partie propagation de messages comprenant le(s) réseau(x) de neurones respectifs de chaque couche et une partie décodage comprenant les décodeurs respectifs de chaque couche.

Selon les modes de réalisation, les encodeurs d'une ou plusieurs des couches de réseau neuronal peuvent être configurés pour effectuer une opération d'encodage identique, et les décodeurs d'une ou plusieurs des couches de réseau neuronal peuvent être configurés pour effectuer une opération de décodage identique.

La Figure 6 illustre un exemple d'architecture de réseau neuronal en graphe (50) correspondant à l'exemple de réseau électrique (40a-4) à 3 nœuds de la Figure 5b.

Dans un ou plusieurs modes de réalisation, un encodage (50-1) est effectué par chaque encodeur de couche de réseau neuronal sur les données d'entrée reçues. Dans certains modes de réalisation, l'encodeur d'une couche de réseau neuronal peut être configuré pour transcoder des données d'entrée (par exemple, en référence à l'exemple de réseau à 3 nœuds des Figures 5a et 5b, des données de dimension 9 correspondant à des données de mesures de tensions ($V$), de puissance active ($P$) et de puissance réactive ($Q$) pour les trois phases ($VPQ \times 3$)) vers un espace latent de dimension $d$, correspondant à un hyperparamètre à optimiser.

Par exemple, dans certains modes de réalisation, pour un nœud $\alpha$, l'information $B_\alpha$ de dimension $d_B$ peut être encodée en un message $H_\alpha^{(0)}$ de dimension $d$. Cet encodage peut être effectué par un dispositif encodeur, qui peut être mis en œuvre par un réseau de neurones totalement connecté.

Dans un ou plusieurs modes de réalisation, un encodeur réalisant une même opération (transformation) d'encodage peut être configuré pour plusieurs des nœuds (dans certains modes de réalisation, tous les nœuds) du réseau neuronal en graphe. En notant cet encodeur $E: \mathbb{R}^{d_B} \to \mathbb{R}^d$, le message encodé correspondant au nœud $\alpha$ peut être représenté par : $H_\alpha^{(0)} = E(B_\alpha)$. La dimension $d$ de l'espace latent et le nombre de couches cachées sont des hyperparamètres à régler.

Dans un ou plusieurs modes de réalisation, une propagation de messages (50-2) est effectuée par les réseaux neuronaux des couches de réseau neuronal du réseau neuronal en graphe sur les messages reçus. Dans un ou plusieurs modes de réalisation, les réseaux de neurones $L(k,i)$ (d'indices $k = 0, \ldots, K - 1$) des couches de réseau neuronal sont configurées pour effectuer une mise à jour de manière itérative (les réseaux de neurones d'indice $k = 0, \ldots, K - 1$ effectuant une itération de mise à jour) du message correspondant à chaque nœud en prenant en compte les messages des nœuds voisins.

Dans un ou plusieurs modes de réalisation, le réseau neuronal en graphe peut être configuré pour effectuer $K$ itérations de propagation de message. Dans certains modes de réalisation, le réseau neuronal en graphe peut être configuré pour appliquer, à chaque itération $k = 0, \ldots, K - 1$, un même réseau de neurone $L^{(k)}$ à un ou plusieurs (dans certains modes de réalisation, à chacun) des $M$ nœuds du réseau électrique considéré. En notant ce réseau de neurones

$$L^{(k)} \colon \mathbb{R}^d \to \mathbb{R}^d$$

, le message correspondant au nœud $\alpha$ après chaque itération de propagation de message peut être

représenté par :
$$H_\alpha^{(k+1)} = H_\alpha^{(k)} + \boldsymbol{L}^{(k)}\left(A, H_\alpha^{(k)}\right)$$
. Dans cette représentation, les caractéristiques des liaisons $A$ en entrée du réseau de neurone $L^{(k)}$ permettent de considérer les messages du voisinage du nœud $\alpha$. Bien que pour une itération $k$, le même réseau de neurones $L^{(k)}$ soit appliqué à chacun des $M$ nœuds du réseau électrique considéré, ce réseau de neurones $L^{(k)}$ varie d'une itération à l'autre.

Dans un ou plusieurs modes de réalisation, le nombre de propagation de messages $K$ est un hyperparamètre, qui peut être préconfiguré ou configuré dynamiquement, par exemple en fonction de caractéristiques du réseau électrique considéré.

Dans un ou plusieurs modes de réalisation, un décodage (50-3) est effectué par chaque décodeur de couche de réseau neuronal du réseau neuronal en graphe sur les messages finaux reçus. Dans un ou plusieurs modes de réalisation, le décodeur d'une couche de réseau neuronal peut être configuré pour transcoder (décoder) le message final de l'espace latent jusqu'à l'espace des données de sortie.

Par exemple, dans certains modes de réalisation, pour un nœud $\alpha$, le message final (K-ième itération) $H_\alpha^{(K)}$ peut être décodé en une sortie $U_\alpha^{(K)}$ correspondant au nœud $\alpha$. Ce décodage peut être effectué par un dispositif décodeur, qui peut être mis en œuvre par un réseau de neurones totalement connecté.

Dans un ou plusieurs modes de réalisation, un décodeur D réalisant une même opération (transformation) de décodage peut être configuré pour plusieurs des nœuds (dans certains modes de réalisation, tous les nœuds) du réseau neuronal en graphe. En notant cet encodeur $D \colon \mathbb{R}^d \to \mathbb{R}^{d_U}$, les données de sortie $U_\alpha^{(K)}$ générées par le décodage du message final $H_\alpha^{(K)}$ correspondant au nœud $\alpha$ peuvent être représentées par : $U_\alpha^{(K)} = \boldsymbol{D}(H_\alpha^{(K)})$.

Dans un ou plusieurs modes de réalisation, un décodeur peut être appliqué à une itération $k < K$ pour passer d'un message intermédiaire latent $H^{(k)}$ correspondant à l'itération $k$ à une sortie intermédiaire $U^{(k)}$.

Ainsi, avantageusement, dans des modes de réalisation dans lesquels une boucle d'apprentissage du réseau neuronal en graphe configurée pour respecter des équations physiques est utilisée, la boucle d'apprentissage pourra être configurée pour respecter lesdites équations physiques progressivement tout au long des itérations de propagation de messages $(1 \le k \le K)$, et non pas juste à la dernière propagation $(k = K)$.

La présente divulgation propose d'utiliser un réseau neuronal en graphe dont l'architecture permet une interaction entre différents réseaux de neurones pour explorer le voisinage des différents nœuds en propageant des messages, ce qui rend cette architecture avantageusement modulable.

Ainsi, avantageusement, dans un ou plusieurs modes de réalisation, un modèle de réseau neuronal entraîné correspondant à un réseau de taille $M$ nœuds peut être utilisé pour gérer un réseau électrique de taille $M' \ne M$ selon un mode de réalisation de la présente divulgation en ajoutant (modifiant, ou supprimant), selon les modes de réalisation, un ou plusieurs blocs de réseaux de neurones entraînés pour appliquer le modèle entrainé à un réseau de taille $M' \ne M$, et en renseignant les liaisons entre les nœuds dans les caractéristiques des liaisons $A$ sur la base de caractéristiques (par exemple électrotechniques) de liaisons du réseau électrique de taille $M'$.

Dans un ou plusieurs modes de réalisation, une boucle d'apprentissage est effectuée afin d'apprendre au modèle (au réseau neuronal en graphe) à produire une sortie qui respecte des lois physiques.

Par exemple, dans certains modes de réalisation, une phase d'apprentissage peut être effectuée sur le réseau neuronal en graphe afin de configurer ce réseau neuronal pour que les tensions complexes en sortie du modèle respectent une ou plusieurs conditions, comme par exemple un ou plusieurs des exemples de condition suivants :

Exemple de condition 1 : Les valeurs des amplitudes des tensions calculées à partir des tensions complexes sont proches des valeurs des amplitudes des tensions qui figurent dans les caractéristiques des nœuds B. Par exemple, les écarts entre les valeurs des amplitudes des tensions calculées à partir des tensions complexes et les valeurs des amplitudes des tensions qui figurent dans les caractéristiques des nœuds B sont inférieures à un seuil, par exemple prédéterminé.

Exemple de condition 2 : Les valeurs des puissances actives calculées à partir des tensions complexes sont proches des valeurs des puissances actives qui figurent dans les caractéristiques des nœuds B. Par exemple, les écarts entre les valeurs des puissances actives calculées à partir des tensions complexes et les valeurs des puissances actives qui figurent dans les caractéristiques des nœuds B sont inférieures à un seuil, par exemple prédéterminé.

Exemple de condition 3 : Les valeurs des puissances réactives calculées à partir des tensions complexes sont proches des valeurs des puissances réactives qui figurent dans les caractéristiques des nœuds B. Par exemple, les écarts entre les valeurs des puissances réactives calculées à partir des tensions complexes et les valeurs des puissances réactives qui figurent dans les caractéristiques des nœuds B sont inférieures à un seuil, par exemple prédéterminé.

Exemple de condition 4 : Les valeurs calculées des tensions complexes triphasées respectent un ou plusieurs parmi le déphasage entre phases et le déphasage induit par le couplage du transformateur :

Les parties réelles des tensions se situent autour des valeurs correspondant à chacune des 3 phases et du neutre données par :

$$\overline{V_{re}^{\varphi n}} = \begin{cases} \cos(\delta) & , si\ \varphi = a \\ \cos\left(\delta + \frac{2\pi}{3}\right), si\ \varphi = b \\ \cos\left(\delta + \frac{4\pi}{3}\right), si\ \varphi = c \\ 0 & , si\ \varphi = n \end{cases}$$

Où $\delta$ est le déphasage dû au couplage du transformateur.

Les parties imaginaires des tensions doivent se situer autour des valeurs correspondant à chacune des 3 phases et du neutre données par :

$$\overline{V_{im}^{\varphi n}} = \begin{cases} \sin(\delta) & , si\ \varphi = a \\ \sin\left(\delta + \frac{2\pi}{3}\right), si\ \varphi = b \\ \sin\left(\delta + \frac{4\pi}{3}\right), si\ \varphi = c \\ 0 & , si\ \varphi = n \end{cases}$$

Où $\delta$ est le déphasage dû au couplage du transformateur.

En fonction du mode de réalisation, la phase d'apprentissage peut être configurée pour qu'une ou plusieurs conditions prédéfinies, par exemple un ou plusieurs (par exemples tous) des exemples de conditions 1 à 4, soient respectées sur un ou plusieurs parmi : un ou plusieurs (par exemple tous) les échantillons de la base de données ($t \in [N_{éch.}]$), un ou plusieurs (par exemple tous) des nœuds ($\alpha \in [M]$) et sur une ou plusieurs parmi les 3 phases ($\varphi \in \{a, b, c\}$).

Dans un ou plusieurs modes de réalisation, la phase d'apprentissage peut en outre être configurée pour qu'une ou plusieurs parmi les unes ou plusieurs conditions soient respectées à la sortie du modèle et soient en outre progressivement assurées tout au long d'une ou plusieurs parmi les itérations de propagation de messages ($k \in [K]$).

La figure 7 illustre un exemple de mise en œuvre d'apprentissage du réseau neuronal en graphe.

Dans l'exemple illustré par la figure 7, la phase d'apprentissage du réseau neuronal en graphe est configurée pour minimiser l'erreur correspondant à l'écart entre les valeurs calculées par le modèle et les valeurs correspondantes respectant certaines conditions prédéterminées.

Par exemple, dans un ou plusieurs modes de réalisation, la phase d'apprentissage peut utiliser une fonction d'apprentissage exprimée comme suit :

Dans un ou plusieurs modes de réalisation, pour un échantillon $t$, un nœud $\alpha$ et à l'itération $k$, la sortie du modèle peut s'écrire :

$$U_{t,\alpha}^{(k)} = \left[V_{t,\alpha_{re}}^{an(k)} \quad V_{t,\alpha_{im}}^{an(k)} \quad V_{t,\alpha_{re}}^{bn(k)} \quad V_{t,\alpha_{im}}^{bn(k)} \quad V_{t,\alpha_{re}}^{cn(k)} \quad V_{t,\alpha_{im}}^{cn(k)} \quad V_{t,\alpha_{re}}^{nt(k)} \quad V_{t,\alpha_{im}}^{nt(k)}\right]$$

Les caractéristiques du nœud $\alpha$ de l'échantillon $t$ peuvent être représentées par :

$$B_{t,\alpha} = [V_{t,\alpha}^{an} \quad P_{t,\alpha}^{an} \quad Q_{t,\alpha}^{an} \quad V_{t,\alpha}^{bn} \quad P_{t,\alpha}^{bn} \quad Q_{t,\alpha}^{bn} \quad V_{t,\alpha}^{cn} \quad P_{t,\alpha}^{cn} \quad Q_{t,\alpha}^{cn}]$$

La phase d'apprentissage peut être configurée pour que les calculs d'une ou plusieurs parmi les amplitudes des tensions, les puissances actives et les puissances réactives en fonction des éléments de $U_{t,\alpha}^{(k)}$ soient proches des valeurs correspondantes dans $B_{t,\alpha}$. Par exemple, la phase d'apprentissage peut être configurée pour que les écarts entre une ou plusieurs parmi les amplitudes des tensions, les puissances actives et les puissances réactives en fonction des éléments de $U_{t,\alpha}^{(k)}$ calculés à partir des éléments de $U_{t,\alpha}^{(k)}$ et les valeurs correspondantes dans $B_{t,a}$ soient inférieurs à un seuil, par exemple prédéterminé.

Dans un ou plusieurs modes de réalisation, pour un échantillon $t$, un nœud $\alpha$, une phase $\varphi$ et à l'itération $k$, l'amplitude de la tension peut être calculée à partir des tensions complexes, par exemple comme suit :

$$\widehat{V}_{t,\alpha}^{\varphi n(k)} = \sqrt{V_{t,\alpha_{re}}^{\varphi n(k)^2} + V_{t,\alpha_{im}}^{\varphi n(k)^2}}.$$

En référence à l'exemple de condition 1, l'écart $\Delta V_{t,\alpha}^{\varphi n(k)}$ à minimiser sur l'amplitude de tension peut être exprimé par toute fonction appropriée de distance entre $\widehat{V}_{t,\alpha}^{\varphi n(k)}$ et $V_{t,\alpha}^{\varphi n}$, telle que par exemple :

$$\Delta V_{t,\alpha}^{\varphi n(k)} = \left\| \widehat{V}_{t,\alpha}^{\varphi n(k)} - V_{t,\alpha}^{\varphi n} \right\|.$$

Dans un ou plusieurs modes de réalisation, la puissance active peut être calculée à partir des tensions complexes, par exemple comme suit :

$$\widehat{P}_{t,\alpha}^{\varphi n(k)} = \sum_{p \in \{a,b,c,n\}} \sum_{\beta=1}^{M} \left[ G_{\alpha\beta}^{\varphi p} \left( V_{t,\alpha_{re}}^{\varphi n(k)} V_{t,\beta_{re}}^{pn(k)} + V_{t,\alpha_{im}}^{\varphi n(k)} V_{t,\beta_{im}}^{pn(k)} \right) + B_{\alpha\beta}^{\varphi p} \left( V_{t,\alpha_{im}}^{\varphi n(k)} V_{t,\beta_{re}}^{pn(k)} - V_{t,\alpha_{re}}^{\varphi n(k)} V_{t,\beta_{im}}^{pn(k)} \right) \right].$$

En référence à l'exemple de condition 2, l'écart $\Delta P_{t,\alpha}^{\varphi n(k)}$ à minimiser sur la puissance active à l'itération $k$ peut être exprimé par toute fonction appropriée de distance entre $\widehat{P}_{t,\alpha}^{\varphi n(k)}$ et $P_{t,\alpha}^{\varphi n}$, telle que par exemple :

$$\Delta P_{t,\alpha}^{\varphi n(k)} = \left\| \widehat{P}_{t,\alpha}^{\varphi n(k)} - P_{t,\alpha}^{\varphi n} \right\|.$$

Dans un ou plusieurs modes de réalisation, la puissance réactive peut être calculée à partir des tensions complexes, par exemple comme suit :

$$\widehat{Q}_{t,\alpha}^{\varphi n(k)} = \sum_{p \in \{a,b,c,n\}} \sum_{\beta=1}^{M} \left[ -B_{\alpha\beta}^{\varphi p} \left( V_{t,\alpha_{re}}^{\varphi n(k)} V_{t,\beta_{re}}^{pn(k)} + V_{t,\alpha_{im}}^{\varphi n(k)} V_{t,\beta_{im}}^{pn(k)} \right) + G_{\alpha\beta}^{\varphi p} \left( V_{t,\alpha_{im}}^{\varphi n(k)} V_{t,\beta_{re}}^{pn(k)} - V_{t,\alpha_{re}}^{\varphi n(k)} V_{t,\beta_{im}}^{pn(k)} \right) \right].$$

En référence à l'exemple de condition 3, l'écart $\Delta Q_{t,\alpha}^{\varphi n(k)}$ à minimiser sur la puissance réactive à l'itération $k$ peut être exprimé par toute fonction appropriée de distance entre $\widehat{Q}_{t,\alpha}^{\varphi n(k)}$ et $Q_{t,\alpha}^{\varphi n}$, telle que par exemple :

$$\Delta Q_{t,\alpha}^{\varphi n(k)} = \left\| \hat{Q}_{t,\alpha}^{\varphi n(k)} - Q_{t,\alpha}^{\varphi n} \right\|.$$

Dans un ou plusieurs modes de réalisation, en référence à l'exemple de condition 4, la contrainte sur la partie réelle de la tension peut être exprimée par :

$$\Delta V_{t,\alpha}{}_{re}^{\varphi n(k)} = \left\| V_{t,\alpha}{}_{re}^{\varphi n(k)} - \overline{V_{re}^{\varphi n}} \right\|.$$

Dans un ou plusieurs modes de réalisation, en référence à l'exemple de condition 4, la contrainte sur la partie imaginaire de la tension peut être exprimée par :

$$\Delta V_{t,\alpha}{}_{im}^{\varphi n(k)} = \left\| V_{t,\alpha}{}_{im}^{\varphi n(k)} - \overline{V_{im}^{\varphi n}} \right\|.$$

Dans un ou plusieurs modes de réalisation, un exemple de fonction objective *Loss* visant à minimiser les écarts et contraintes exprimés pour les exemples de condition 1 à 4 peut être exprimé comme suit :

[0241]    $Loss = \sum_{t=1}^{N_{éch.}} \sum_{k=1}^{K} \sum_{\alpha=1}^{M} \sum_{\varphi \in \{a,b,c\}} \omega_1(k) \Delta V_{t,\alpha}^{\varphi n(k)^2} + \omega_2(k) \left( \Delta P_{t,\alpha}^{\varphi n(k)^2} + \Delta Q_{t,\alpha}^{\varphi n(k)^2} + \right.$

$\left. \Delta V_{t,\alpha}{}_{re}^{\varphi n(k)^2} + \Delta V_{t,\alpha}{}_{im}^{\varphi n(k)^2} \right),$

Selon le mode de réalisation, toutes fonctions de poids $\omega_1$ et $\omega_2$ appropriées pourront être utilisées dans la fonction de perte *Loss,* comme par exemple les fonctions de poids $\omega_1(k) = \gamma^{K-k}$ et $\omega_2(k) = 1 - \gamma^{K-k}$, $\gamma$ étant un hyperparamètre prédéfini, choisi par exemple entre 0 et 1.

Par exemple, dans un ou plusieurs modes de réalisation, on pourra choisir une première fonction de poids (appliquée aux valeurs des amplitudes des tensions) $\omega_1$ croissante (en fonction de la variable $k$ désignant l'indice d'itération de propagation de message) sur le domaine considéré, et une deuxième fonction de poids $\omega_2$ décroissante (en fonction de la variable $k$ désignant l'indice d'itération de propagation de message), de manière à ce qu'un poids croissant soit donné pour le respect des valeurs des amplitudes de tension et, à l'inverse, un poids décroissant soit donné pour le respect des autres conditions, pendant les itérations de propagation des messages.

Dans les modes de réalisation visant à utiliser un procédé proposé selon la présente divulgation avec des performances de temps réel ou quasi temps réel, des cas de figure dans lesquels le nombre de mesures (de tensions, de puissances actives et de puissances réactives obtenues en temps réel (ou, selon le mode de réalisation, quasi-temps réel) pour le réseau électrique considéré) est jugé trop faible pour que l'estimation par le réseau neuronal en graphe des amplitudes des tensions respectives (non mesurées) des nœuds de l'ensemble de nœuds du réseau électrique considéré présente les performances souhaitées (par exemple ait la précision souhaitée). En particulier, les caractéristiques des nœuds *B* du réseau électrique considéré sur lesquels les mesures sont obtenues peuvent présenter des valeurs manquantes.

Dans un ou plusieurs modes de réalisation, un remplacement des mesures manquantes peut être effectué afin de générer des données pouvant remplacer ces valeurs manquantes et compléter les données d'entrée du modèle entrainé, de façon à obtenir une meilleure estimation par le réseau neuronal en graphe des amplitudes des tensions respectives (non mesurées) des nœuds de l'ensemble des nœuds du réseau électrique considéré lors d'une phase d'inférence du réseau neuronal en graphe.

Dans un ou plusieurs modes de réalisation, des pseudo-mesures d'un ou plusieurs parmi une ou plusieurs puissances actives non mesurées et une ou plusieurs puissances réactives non mesurées peuvent être utilisées pour remédier à l'absence de ces mesures.

Dans un ou plusieurs modes de réalisation, les éventuelles mesures (des amplitudes) de tensions manquantes peuvent être considérées comme des variables à optimiser par un moteur d'optimisation configuré pour employer le modèle entrainé comme fonction objectif.

En fonction du mode de réalisation, on pourra utiliser pour cette optimisation toute technique d'optimisation appropriée, comme par exemple la technique d'optimisation par essaims particulaires notée PSO (de l'anglais *Particles Swarm Optimization*).

La Figure 8 montre un schéma illustrant un exemple de procédé (60) de gestion d'un réseau électrique conçu pour une utilisation temps réel (ou, selon le mode de réalisation, quasi-temps réel).

La figure 8 montre un modèle entraîné (MOD) de réseau neuronal en graphe, configuré sur la base de données représentatives d'une topologie du réseau électrique considéré selon un ou plusieurs modes de réalisation de la présente divulgation. Le modèle entraîné (MOD) de réseau neuronal en graphe est en outre configuré pour recevoir des mesures de tensions (AMP_V_MES) (par exemple des données d'amplitudes de tension mesurées), d'une ou plusieurs parmi des mesures de puissance active et des mesures de puissance réactive (P_MES) (par exemple des données de puissances actives et/ou réactives mesurées), ces mesures étant remontées en temps réel (ou, selon le mode de réalisation, quasi-temps réel) des nœuds d'un sous-ensemble d'un ensemble de nœuds du réseau électrique considéré, selon un ou plusieurs modes de réalisation de la présente divulgation.

Comme illustré par la Figure 8, dans certains modes de réalisation où les remontées de mesure effectuées en temps réel (ou, selon le mode de réalisation, quasi-temps réel) sont fournies entrée du modèle entraîné (MOD) pour effectuer une inférence de données sur la base de ces mesures, une ou plusieurs mesures parmi les mesures de tensions (AMP_V_N_MES) (par exemple des données d'amplitudes de tension mesurées), les mesures de puissance active et les mesures de puissance réactive (P_N_MES) (par exemple des données de puissances actives et/ou réactives mesurées) peuvent ne pas remonter suffisamment rapidement pour être incluses dans les remontées de mesures en temps réel (ou, selon le mode de réalisation, quasi-temps réel) fournies en entrée du modèle entraîné (MOD). Selon le mode de réalisation, ces mesures non remontées en temps réel peuvent être considérées manquantes, et peuvent être remplacées pour fourniture en entrée du modèle entraîné (MOD).

Par exemple, dans un ou plusieurs modes de réalisation, une ou plusieurs parmi la ou les mesures de puissance (mesure de puissance active et/ou mesures de puissance réactive) manquantes (P_N_MES) peuvent être remplacées par des pseudo-mesures correspondantes (PM_P) qui sont fournies en entrée du modèle entraîné pour remédier à l'absence de ces mesures.

Par exemple, dans un ou plusieurs modes de réalisation, une ou plusieurs parmi la ou les mesures (des amplitudes) de tensions manquantes (P_N_MES) peuvent être remplacées par des pseudo-mesures correspondantes (PM_P) qui sont fournies en entrée du modèle entraîné (MOD) pour remédier à l'absence de ces mesures de puissances.

Dans certains modes de réalisation, une ou plusieurs parmi la ou les mesures (des amplitudes) de tensions manquantes (AMP_V_N_MES) peuvent être remplacées par des pseudo-mesures correspondantes (PM_V) qui sont fournies en entrée d'un moteur d'optimisation (Init., PSO), de préférence configuré pour employer le modèle entrainé (MOD) comme fonction objective, et dont les données de sortie sont fournies au modèle entraîné (MOD) pour remédier à l'absence de ces mesures (d'amplitude) de tension.

Dans un ou plusieurs modes de réalisation, un procédé proposé utilisable pour déterminer, par un réseau neuronal en graphe, en temps réel (ou, selon le mode de réalisation, quasi-temps réel) une estimation des amplitudes de tensions respectives des nœuds d'un ensemble de nœuds d'un réseau électrique considéré peut comprendre une ou plusieurs des actions suivantes, selon le mode de réalisation :

Fournir une ou plusieurs parmi (dans certains modes de réalisation toutes) les mesures (AMP_V_MES, P_MES) remontées en temps réel (ou, selon le mode de réalisation, quasi-temps réel) pour certains nœuds d'un sous-ensemble de nœuds du réseau électrique considéré comme données d'entrée du modèle (MOD) entrainé (réseau neuronal en graphe).

Le réseau neuronal en graphe (illustré par exemple par le modèle entraîné (MOD) de la Figure 8) aura été au préalable configuré sur la base de données représentatives d'une topologie du réseau électrique considéré, et entraîné en utilisant un ou plusieurs réseaux électriques d'entraînement, selon un ou plusieurs des modes de réalisation décrits dans la présente divulgation.

Calculer ou, selon le mode de réalisation, obtenir des pseudo-mesures d'une ou plusieurs parmi les puissances actives et réactives lorsque celles-ci ne sont pas mesurées (pour ceux des nœuds du sous-ensemble de nœuds du réseau électrique considéré pour lesquels des mesures de puissances ne sont pas remontées en temps réel (ou, selon le mode de réalisation, quasi-temps réel).

Calculer ou, selon le mode de réalisation, obtenir des pseudo-mesures des (amplitudes des) tensions lorsque celles-ci ne sont pas mesurées (pour ceux des nœuds du sous-ensemble de nœuds du réseau électrique considéré pour lesquels des mesures des (amplitudes des) tensions ne sont pas remontées en temps réel (ou, selon le mode de réalisation, quasi-temps réel)).

Utiliser une ou plusieurs des pseudo-mesures des (amplitudes des) tensions non mesurées pour initialiser un moteur d'optimisation (par exemple pour initialiser les particules d'un optimiseur PSO), puis exécuter le moteur d'optimisation (par exemple lancer l'optimiseur PSO).

Inclure dans les données d'entrée du modèle (MOD) entraîné fournies en entrée du modèle (MOD) une ou plusieurs parmi les pseudo-mesures d'une ou plusieurs parmi les puissances actives et réactives et les pseudo-mesures des (amplitudes des) tensions, éventuellement dans certains modes de réalisation après optimisation par le moteur d'optimisation.

Déterminer, par le modèle (MOD) entraîné (réseau neuronal en graphe) une estimation des amplitudes de tensions respectives des nœuds d'un ensemble de nœuds du réseau électrique considéré incluant le sous-ensemble de nœuds pour lesquels des mesures ou des pseudo-mesures ont été fournies.

Avantageusement, le procédé proposé peut donc permettre d'obtenir une estimation des amplitudes de tensions respectives des nœuds d'un ensemble de nœuds du réseau électrique considéré sur la base de mesures effectuées en temps réel (ou, selon le mode de réalisation, quasi-temps réel) ou de pseudo-mesures (pour pallier l'absence de mesures temps-réel) pour un sous-ensemble de nœuds de l'ensemble de nœuds (comprenant un nombre (très) inférieur au nombre de nœuds de l'ensemble de nœuds du réseau électrique considéré). Ainsi, dans un ou plusieurs modes de réalisation, le procédé proposé peut être utilisé pour obtenir une estimation des amplitudes de tensions respectives de tous les nœuds d'un ensemble de nœuds du réseau électrique considéré sur la base d'un sous-ensemble de nœuds (comprenant un nombre (très) inférieur au nombre de nœuds du réseau électrique considéré) pour lesquels des mesures sont obtenues en temps réel (ou, selon le mode de réalisation, quasi-temps réel), ou à défaut, des pseudo-mesures sont déterminées.

Selon le mode de réalisation, différents schémas pour constituer des pseudo-mesures des puissances actives réactives et des amplitudes des tensions peuvent être utilisées. Par exemple, dans certains modes de réalisation, des techniques statistiques ou d'apprentissage automatique qui se basent sur un historique de mesures de ces grandeurs peuvent être utilisées.

Selon un aspect de la présente divulgation, un procédé de génération de pseudo-mesures est proposé, qui présente l'avantage d'être peu coûteux en termes de données. En effet, dans un ou plusieurs modes de réalisation, le procédé proposé se base sur des mesures remontées en temps réel (ou, selon le mode de réalisation, quasi-temps réel) sans utiliser un historique de mesures.

Des exemples respectifs de génération de différentes pseudo-mesures (puissance active, puissance réactive et tension) selon un ou plusieurs modes de réalisation du procédé proposé sont décrits ci-après :

Dans un ou plusieurs modes de réalisation, dans le cas d'une mesure de la puissance active $P_\alpha^{\varphi n}$ d'une phase $\varphi$ d'un nœud $\alpha$ qui n'est pas disponible (par exemple parce que cette mesure n'est pas effectuée ou n'est pas remontée en temps réel (ou, selon le mode de réalisation, quasi-temps réel)), elle peut être remplacée par une pseudo-mesure qui correspond à la fraction de la puissance active mesurée d'un transformateur (haute-tension / basse tension, ou HTA/BT), selon la puissance raccordée sur la phase et le nœud en question.

Dans un ou plusieurs modes de réalisation, cette pseudo-mesure peut être calculée comme suit :

$$P_{pseudo}{}_\alpha^{\varphi n} = P_{tr}^{\varphi n} \times \frac{P_{souscrite}{}_\alpha^\varphi}{\sum_{\beta=1}^{M'} P_{souscrite}{}_\beta^\varphi}$$

Où $P_{tr}^{\varphi n}$ correspond à la puissance active mesurée au secondaire du transformateur HTA/BT, $P_{souscrite}{}_\alpha^\varphi$ correspond à la puissance de charge raccordée au nœud et la phase en question, et $\sum_{\beta=1}^{M'} P_{souscrite}{}_\beta^\varphi$ correspond à la somme des puissances de charges raccordées sur tous les nœuds de la phase en question.

Dans un ou plusieurs modes de réalisation, dans le cas d'une mesure de la puissance réactive $Q_\alpha^{\varphi n}$ d'une phase $\varphi$ d'un nœud $\alpha$ qui n'est pas disponible (par exemple parce que cette mesure n'est pas effectuée ou n'est pas remontée en temps réel (ou, selon le mode de réalisation, quasi-temps réel)), elle peut être remplacée par une pseudo-mesure qui correspond à la fraction de la puissance réactive mesurée du transformateur (haute-tension / basse tension, ou HTA/BT), selon la puissance raccordée sur la phase et le nœud en question.

Dans un ou plusieurs modes de réalisation, cette pseudo-mesure peut être calculée comme suit :

$$Q_{pseudo}{}_\alpha^{\varphi n} = Q_{tr}^{\varphi n} \times \frac{P_{souscrite}{}_\alpha^\varphi}{\sum_{\beta=1}^{M'} P_{souscrite}{}_\beta^\varphi}$$

Où : $Q_{tr}^{\varphi n}$ correspond à la puissance réactive mesurée au secondaire du transformateur HTA/BT, $P_{souscrite}{}_\alpha^\varphi$ correspond à la puissance de charge raccordée au nœud et la phase en question, et

$\sum_{\beta=1}^{M'} P_{souscrite}{}_{\beta}^{\varphi}$ correspond à la somme des puissances de charges raccordées sur tous les nœuds de la phase en question.

Dans un ou plusieurs modes de réalisation, dans le cas d'une mesure de la tension $V_{\alpha}^{\varphi n}$ d'une phase $\varphi$ d'un nœud $\alpha$ qui n'est pas disponible (par exemple parce que cette mesure n'est pas effectuée ou n'est pas remontée en temps réel (ou, selon le mode de réalisation, quasi-temps réel)), elle peut être remplacée par une pseudo-mesure qui peut par exemple correspondre à la moyenne des tensions de son premier voisinage mesuré.

Dans un ou plusieurs modes de réalisation, cette pseudo-mesure de tension peut être utilisée pour initialiser un moteur d'optimisation configuré pour fournir en entrée d'un réseau neuronal en graphe configuré selon un mode de réalisation de la présente divulgation des données de remplacement de la mesure de tension non disponible correspondante. Par exemple, dans les modes de réalisation dans lesquels le moteur d'optimisation utilisé est de type PSO, la pseudo-mesure de tension peut être utilisée pour initialiser les particules du PSO autour de cette valeur.

On décrit ci-après un mode de réalisation dans lequel un moteur d'optimisation de type PSO est utilisé pour optimiser une ou plusieurs pseudo-mesures de tension avant fourniture en entrée d'un réseau neuronal en graphe.

La technique du PSO est inspirée du monde du vivant. Elle se base sur la collaboration des individus entre eux pour s'organiser à trouver une position optimale. Au départ de l'algorithme, chaque particule (unidimensionnelle ou multidimensionnelle) est initialisée (aléatoirement ou non) dans l'espace de recherche du problème.

A une itération $l$, la position $X_i^l$ d'une particule $i$ est mise à jour selon 3 composantes : sa vitesse actuelle $V_i^l$, sa meilleure solution $s_i$ et la meilleure solution obtenue dans son voisinage $s_g$.

La vitesse de la particule peut être mise à jour selon l'équation suivante :

$$V_i^{l+1} = \omega V_i^l + b_1\left(s_i - X_i^l\right) + b_2\left(s_g - X_i^l\right)$$

Où $\omega$, $b_1$ et $b_2$ sont des hyperparamètres prédéfinis, qui permettent de définir la stratégie d'exploration de l'espace de recherche, en fixant le degré de dépendance de chaque particule d'elle-même ou de son entourage.

La position de la particule peut être mise à jour selon l'équation suivante :

$$X_i^{l+1} = X_i^l + V_i^{l+1}$$

Dans un ou plusieurs modes de réalisation, les (amplitudes des) tensions pour lesquelles une mesure n'est pas disponible peuvent être utilisées comme variable d'optimisation de l'algorithme PSO. Dans ce contexte, la dimension de chaque particule prise en compte peut correspondre au nombre (d'amplitudes) de tensions pour lesquelles une mesure n'est pas disponible. Dans certains modes de réalisation, ces particules peuvent être initialisées autour des pseudo-mesures des amplitudes des tensions déterminées précédemment.

Dans ces modes de réalisation, pour une particule $i$, à une itération $l$, $X_i^l$ peut correspondre à un ensemble de valeurs (des amplitudes) des tensions non mesurées, dans l'espace de recherche du problème.

Dans un ou plusieurs modes de réalisation, en injectant $X_i^l$ dans les positions manquantes des caractéristiques des nœuds $B$, on note $B_i^l$ les caractéristiques des nœuds correspondants à la particule $i$ à l'itération $l$.

Dans un ou plusieurs modes de réalisation, $B_i^l$ peut comprendre un ou plusieurs parmi des : mesures (des amplitudes) des tensions mesurées, des mesures d'une ou plusieurs parmi des puissances actives et réactives mesurées, des pseudo-mesures d'une ou plusieurs parmi des puissances actives et réactives non mesurées (ou pour lesquelles une mesure n'est pas disponible), et les valeurs de $X_i^l$ qui représentent les valeurs (des amplitudes) des tensions non mesurées pour la particule $i$ à l'itération $k$.

Dans un ou plusieurs modes de réalisation, en appliquant le modèle entrainé $GNN_{entrainé}$ sur les données correspondantes à une particule $i$, à une itération $l$, on obtient une estimation des amplitudes des tensions $V_{i,l}^*$ qui est séparée en $V^*_{i,l,mes}$ et $V^*_{i,l,non\,mes}$ pour désigner respectivement l'estimation (des amplitudes) des tensions mesurées et non mesurées.

$$V^*_{i,l} = \begin{bmatrix} V^*_{i,l,mes.} \\ V^*_{i,l,non\,mes.} \end{bmatrix} = GNN_{entrainé}\left(A, B^l_i\right)$$

L'objectif de cette optimisation itérative est de minimiser l'écart entre les amplitudes des tensions mesurées et l'estimation des amplitudes des tensions mesurées.

Pour une particule *i*, à l'itération *l*, la solution $s_i$ correspondant à l'une des itérations $l' \leq l$ où l'écart suivant est minimal peut être considérée comme optimale (pour la particule) :

$$\min_{\substack{X^l_i \\ l' \leq l}} \left\| V_{mes.} - V^*_{i,l',mes.} \right\|$$

Où $V_{mes.}$ regroupe les amplitudes des tensions mesurées.

A l'itération *l*, la solution globale $s_g$ correspondant à l'une des particules $i \in [N_{particules}]$ où l'écart est minimal peut être considérée comme optimale :

$$\min_{\substack{X^l_i \\ i \in [N_{particules}]}} \left\| V_{mes.} - V^*_{i,l,mes.} \right\|$$

La mise en œuvre d'itérations d'une boucle de mise à jour de position permet, pour chaque particule *i*, de converger vers la meilleure position de la particule. A la fin de cette démarche, on s'intéresse à l'estimation des amplitudes des tensions non mesurées $V^*_{non\,mes}$ obtenue en sortie du modèle entrainé ayant comme données d'entrée les caractéristiques des nœuds correspondant à la meilleure position des particules.

La figure 9a illustre un exemple d'architecture d'équipement pour la mise en œuvre du procédé proposé selon un ou plusieurs modes de réalisation.

En référence à la figure 9a, le dispositif 100a comprend un contrôleur 104a, couplé de manière opérationnelle à une mémoire 101, qui pilote un module 102a de gestion de réseau neuronal, et un module 103a réseau neuronal.

Le contrôleur 104a est configuré pour piloter les module 102a de gestion de réseau neuronal, et module 103a réseau neuronal pour la mise en œuvre d'un ou de plusieurs modes de réalisation du procédé proposé.

Le module 102a de gestion de réseau neuronal est configuré pour la mise en œuvre du procédé proposé par le dispositif 100a. En particulier, le module 102a de gestion de réseau neuronal peut être configuré pour remplir les fonctions et accomplir les actes décrits dans la présente description pour la mise en œuvre de la configuration d'un réseau neuronal en graphe selon un ou plusieurs modes de réalisation du procédé proposé dans la présente divulgation. Dans certains modes de réalisation, le module 102a de gestion de réseau neuronal peut être en outre configuré pour remplir les fonctions et accomplir les actes décrits dans la présente description pour la mise en œuvre d'une phase d'apprentissage du réseau neuronal en graphe, comprenant par exemple une phase d'apprentissage de un ou plusieurs réseaux de neurones $L(k,i)$ de couches du réseau neuronal en graphe, selon un ou plusieurs modes de réalisation du procédé proposé dans la présente divulgation.

Le module 103a réseau neuronal est configuré pour la mise en œuvre du procédé proposé par le dispositif 100a. En particulier, le module 103a réseau neuronal peut comprendre un réseau neuronal en graphe, par exemple de type à transmission de messages, qui peut être configuré selon un ou plusieurs modes de réalisation du procédé proposé dans la présente divulgation.

Le dispositif 100a peut être un ordinateur, un réseau d'ordinateurs, un composant électronique, ou un autre appareil comportant un processeur couplé de manière opérationnelle à une mémoire, ainsi que, selon le mode de réalisation choisi, une unité de stockage de données, et d'autres éléments matériels associés comme une interface de réseau et un lecteur de support pour lire un support de stockage amovible et écrire sur un tel support (non représentés sur la figure). Le support de stockage amovible peut être, par exemple, un disque compact (CD), un disque vidéo/polyvalent numérique (DVD), un disque flash, une clé USB, une mémoire SSD, etc. En fonction du mode de réalisation, la mémoire, l'unité de stockage de données ou le support de stockage amovible contient des instructions qui, lorsqu'elles sont exécutées par le contrôleur 104a, amènent ce contrôleur 104a à effectuer ou contrôler les parties module 102a de gestion de réseau neuronal et module 103a réseau neuronal pour la mise en œuvre d'un ou de plusieurs modes de réalisation du procédé proposé. Le contrôleur 104a peut être un composant implémentant un processeur ou une unité de calcul pour la configuration d'un réseau neuronal en graphe selon le procédé proposé et le contrôle des modules 101 à 103a du dispositif 100a.

Le dispositif 100a peut être mis en œuvre sous forme logicielle, sous forme matérielle, comme un circuit intégré spécifique application (ASIC), ou sous forme d'une combinaison d'éléments matériels et logiciels. De même, chacun des modules 101a à 103a peut être mis en œuvre sous forme logicielle, sous forme matérielle, comme un ASIC, ou sous forme d'une combinaison d'éléments matériels et logiciels.

La figure 9b illustre un exemple d'architecture d'équipement configuré pour la mise en œuvre d'un procédé de gestion de réseau électrique utilisant un réseau neuronal en graphe configuré selon un ou plusieurs modes de réalisation du procédé proposé.

En référence à la figure 9b, le dispositif 100b comprend un contrôleur 105b, couplé de manière opérationnelle à une mémoire 101b, qui pilote un module 102b d'obtention de mesures de tension, un module 103b de gestion de réseau neuronal, et un module 104b réseau neuronal.

Le contrôleur 105b est configuré pour piloter les module 102b d'obtention de mesures de tension, module 103b de gestion de réseau neuronal, et module 104b réseau neuronal pour la mise en œuvre d'un ou de plusieurs modes de réalisation du procédé proposé.

Le module 102b d'obtention de mesures de tension est configuré pour la mise en œuvre du procédé proposé par le dispositif 100b. En particulier, le module 102b d'obtention de mesures de tension peut être configuré pour remplir les fonctions et accomplir les actes décrits dans la présente description pour la mise en œuvre de l'obtention de mesures de tension pour chaque nœud d'un sous-ensemble de l'ensemble de nœuds du réseau électrique selon un ou plusieurs modes de réalisation du procédé proposé dans la présente divulgation. Dans certains modes de réalisation, le module 102b d'obtention de mesures de tension peut être en outre configuré pour remplir les fonctions et accomplir les actes décrits dans la présente description pour la mise en œuvre de l'obtention de mesures de puissance active et de mesures de puissance réactive, pour chaque nœud du sous-ensemble de l'ensemble de nœuds du réseau électrique, selon un ou plusieurs modes de réalisation du procédé proposé dans la présente divulgation

Le module 103b de gestion de réseau neuronal est configuré pour la mise en œuvre du procédé proposé par le dispositif 100b. En particulier, le module 103b de gestion de réseau neuronal peut être configuré pour remplir les fonctions et accomplir les actes décrits dans la présente description pour la mise en œuvre de la configuration d'un réseau neuronal en graphe sur la base de données représentatives d'une topologie du réseau électrique selon un ou plusieurs modes de réalisation du procédé proposé dans la présente divulgation. Dans certains modes de réalisation, le module 103b de gestion de réseau neuronal peut être en outre configuré pour remplir les fonctions et accomplir les actes décrits dans la présente description pour la mise en œuvre d'une phase d'apprentissage du réseau neuronal en graphe, comprenant par exemple une phase d'apprentissage d'un ou plusieurs réseaux de neurones $L(k,i)$ de couches du réseau neuronal en graphe, selon un ou plusieurs modes de réalisation du procédé proposé dans la présente divulgation.

Le module 104b réseau neuronal est configuré pour la mise en œuvre du procédé proposé par le dispositif 100b. En particulier, le module 104b réseau neuronal peut être configuré pour remplir les fonctions et accomplir les actes décrits dans la présente description pour la mise en œuvre de la détermination, par le réseau neuronal en graphe configuré, d'une estimation des amplitudes de tensions respectives des nœuds de l'ensemble de nœuds sur la base des mesures de tension des nœuds du sous-ensemble selon un ou plusieurs modes de réalisation du procédé proposé dans la présente divulgation.

Le dispositif 100b peut être un ordinateur, un réseau d'ordinateurs, un composant électronique, ou un autre appareil comportant un processeur couplé de manière opérationnelle à une mémoire, ainsi que, selon le mode de réalisation choisi, une unité de stockage de données, et d'autres éléments matériels associés comme une interface de réseau et un lecteur de support pour lire un support de stockage amovible et écrire sur un tel support (non représentés sur la figure). Le support de stockage amovible peut être, par exemple, un disque compact (CD), un disque vidéo/polyvalent numérique (DVD), un disque flash, une clé USB, une mémoire SSD, etc. En fonction du mode de réalisation, la mémoire, l'unité de stockage de données ou le support de stockage amovible contient des instructions qui, lorsqu'elles sont exécutées par le contrôleur 105b, amènent ce contrôleur 105b à effectuer ou contrôler les parties module 102b d'obtention de mesures de tension, module 103b de gestion de réseau neuronal, et module 104b réseau neuronal pour la mise en œuvre d'un ou de plusieurs modes de réalisation du procédé proposé. Le contrôleur 105b peut être un composant implémentant un processeur ou une unité de calcul pour la gestion de réseaux électriques et le contrôle des modules 101b à 104b du dispositif 100b.

Le dispositif 100b peut être mis en œuvre sous forme logicielle, sous forme matérielle, comme un circuit intégré spécifique application (ASIC), ou sous forme d'une combinaison d'éléments matériels et logiciels. De même, chacun des modules 102b à 104b peut être mis en œuvre sous forme logicielle, sous forme matérielle, comme un ASIC, ou sous forme d'une combinaison d'éléments matériels et logiciels.

Dans les modes de réalisation utilisant un réseau neuronal en graphe de type à transmission de message, le procédé de configuration proposé permet d'utiliser avantageusement une propagation itérative de messages avec le voisinage de chaque nœud, ce qui présente le double avantage d'une interaction entre des réseaux de neurones pour explorer le voisinage et propager des messages et d'une architecture modulable qui peut être appliquée à des réseaux de tailles différentes, par opposition aux procédés conventionnels qui n'utilisent qu'un seul réseau de neurones qui traite l'ensemble des données du réseau électrique à gérer et dont l'application est ainsi limitée à ce même réseau électrique.

Les procédés proposés dans la présente divulgation présentent en outre les avantages utilisateur suivants :

Le procédé proposé de gestion d'un réseau électrique permet de n'utiliser qu'un nombre limité de mesures (par exemple temps réel ou quasi temps réel) pour observer des réseaux BT.

Le procédé proposé de gestion d'un réseau électrique ne nécessite pas de renforcer les réseaux de télécommunication pour remonter un grand nombre de mesures en temps réel.

Le procédé proposé de gestion d'un réseau électrique peut utiliser les données des capteurs déjà présents, et est ainsi immédiatement applicable sur les réseaux électriques à gérer qui sont équipés de capteurs de remontée de mesures. Ainsi, le procédé proposé permet d'éviter un surcoût pour l'installation de capteurs supplémentaires

Les procédés proposés de gestion d'un réseau électrique et de configuration d'un réseau neuronal en graphe utilisent avantageusement un modèle modulable et généralisable.

Le procédé proposé de gestion d'un réseau électrique permet d'observer des réseaux BT d'un opérateur. Il permet notamment d'activer des actions de contrôle, de pilotage et de réglages, d'accueillir les producteurs et les nouvelles consommations, d'exploiter le réseau près de son point de dimensionnement, et d'éviter les coûts supplémentaires des travaux de renforcement.

En fonction du mode de réalisation choisi, certains actes, actions, évènements ou fonctions de chacune des méthodes décrites dans le présent document peuvent être effectués ou se produire selon un ordre différent de celui dans lequel ils ont été décrits, ou peuvent être ajoutés, fusionnés ou bien ne pas être effectués ou ne pas se produire, selon le cas. En outre, dans certains modes de réalisation, certains actes, actions ou évènements sont effectués ou se produisent concurremment et non pas successivement.

Bien que décrits à travers un certain nombre d'exemples de réalisation détaillés, le procédé proposé et le dispositif pour la mise en œuvre d'un mode de réalisation du procédé comprennent différentes variantes, modifications et perfectionnements qui apparaîtront de façon évidente à l'homme de l'art, étant entendu que ces différentes variantes, modifications et perfectionnements font partie de la portée de l'invention, telle que définie par les revendications qui suivent. De plus, différents aspects et caractéristiques décrits ci-dessus peuvent être mis en œuvre ensemble, ou séparément, ou bien substitués les uns aux autres, et l'ensemble des différentes combinaisons et sous-combinaisons des aspects et caractéristiques font partie de la portée de l'invention. En outre, il se peut que certains systèmes et équipements décrits ci-dessus n'incorporent pas la totalité des modules et fonctions décrits pour les modes de réalisation préférés.

**Revendications**

1. Procédé, mis en œuvre par ordinateur, de configuration d'un réseau neuronal en graphe pour gérer un réseau électrique, le procédé comprenant :

   - Obtenir des données représentatives de topologie du réseau électrique, les données représentatives de topologie comprenant un nombre $N$ de nœuds du réseau électrique ;
   - Configurer $N_{gnn}$ couches de réseau neuronal du réseau neuronal en graphe, chaque couche i de réseau neuronal comprenant un ou plusieurs réseaux de neurones $L(k,i)$, et dans lequel le nombre $N_{gnn}$ de couches de réseau neuronal correspond au nombre $N$ de nœuds du réseau électrique ;
   - Configurer, sur la base des données représentatives de topologie du réseau électrique comprenant une ou plusieurs connexions dans le réseau électrique, pour chaque connexion parmi les une ou plusieurs connexions dans le réseau électrique existant entre un premier et un deuxième nœud du réseau électrique correspondant respectivement à la connexion, une connexion neuronale entre un réseau de neurones $L(k,i1)$ d'une première couche $i1$ du réseau neuronal en graphe et un réseau de neurones $L(j,i2)$ d'une deuxième couche $i2$ du réseau neuronal en graphe, le premier et le deuxième nœud du réseau électrique correspondant respectivement aux première et deuxième couches $i1$ et $i2$ du réseau neuronal en graphe et la connexion neuronale entre les réseaux de neurones $L(k,i1)$ et $L(j,i2)$ correspondant à la connexion dans le réseau électrique entre le premier et le deuxième nœud ; et
   - Utiliser le réseau neuronal en graphe configuré pour la gestion du réseau électrique.

2. Procédé selon la revendication 1, dans lequel chaque couche i de réseau neuronal comprend en outre un encodeur $E(i)$ configuré pour recevoir données d'entrée du réseau neuronal en graphe et couplé de manière opérationnelle à un premier parmi un ou plusieurs réseaux de neurones $L(k,i)$, et un décodeur $D(i)$ couplé de manière opérationnelle à un deuxième parmi les un ou plusieurs réseaux de neurones $L(k,i)$ et configuré pour produire en sortie des données de sortie du réseau neuronal en graphe.

3. Procédé selon l'une quelconque des revendications précédentes, dans lequel le réseau neuronal en graphe configuré est utilisé pour déterminer une estimation des amplitudes de tensions respectives d'un ensemble de nœuds du réseau électrique sur la base de mesures de tension des nœuds d'un sous-ensemble de l'ensemble de nœuds du réseau électrique fournies en entrée du réseau neuronal en graphe.

4. Procédé selon l'une quelconque des revendications précédentes, dans lequel les données représentatives de topologie du réseau électrique sont comprises dans une structure de données correspondant à une représentation en graphe $G = (V,E)$ du réseau électrique, dans lequel $V$ désigne un ensemble de nœuds du graphe représentant respectivement des nœuds du réseau électrique et $E$ désigne un ensemble de connexions du graphe représentant respectivement des connexions électriques entre les nœuds du réseau électrique, et dans lequel le réseau neuronal en graphe est configuré en établissant des correspondances respectives entre un ou plusieurs parmi les nœuds de l'ensemble $V$ du graphe et les couches de réseau neuronal du réseau neuronal en graphe et les connexions de l'ensemble $E$ du graphe et les connexions neuronales du réseau neuronal en graphe.

5. Procédé selon l'une quelconque des revendications précédentes, comprenant : effectuer une phase d'apprentissage des un ou plusieurs réseaux de neurones $L(k,i)$ des couches du réseau neuronal en graphe, suite à laquelle chaque couche $i$ de réseau neuronal comprend un ou plusieurs réseaux de neurones $L(k,i)$ entrainés.

6. Procédé selon l'une quelconque des revendications précédentes, dans lequel le réseau neuronal en graphe est de type à transmission de messages, et dans lequel chaque couche $i$ de réseau neuronal comprenant en outre un encodeur $E(i)$ configuré pour recevoir données d'entrée du réseau neuronal en graphe et couplé de manière opérationnelle à un parmi l'un ou plusieurs réseaux de neurones $L(k,i)$, et un décodeur $D(i)$ couplé de manière opérationnelle à un parmi les un ou plusieurs réseaux de neurones $L(k,i)$ et configuré pour produire en sortie des données de sortie du réseau neuronal en graphe, l'encodeur E(i) comprenant un réseau de neurones totalement connecté configuré pour générer un message par encodage de données fournies en entrée de la couche $i$ du réseau neuronal en graphe, et le décodeur comprenant un réseau de neurones totalement connecté configuré pour générer des données de sortie de la couche $i$ du réseau neuronal en graphe par décodage d'un message reçu d'un réseaux de neurones de la couche $i$ du réseau neuronal en graphe.

7. Procédé selon la revendication 2, dans lequel un ou plusieurs parmi l'encodeur $E(i)$ et le décodeur $D(i)$ comprennent des réseaux de neurones entraînés selon une phase d'apprentissage du réseau neuronal en graphe.

8. Procédé selon l'une quelconque des revendications précédentes, comprenant : effectuer une phase d'apprentissage du réseau neuronal en graphe sur la base de données respectivement représentatives de topologie d'un ou plusieurs réseaux électriques d'apprentissage.

9. Procédé selon l'une quelconque des revendications précédentes, comprenant : effectuer une phase d'apprentissage du réseau neuronal en graphe sur la base de données respectivement représentatives de topologie d'un ou plusieurs réseaux électriques d'apprentissage et de données respectivement représentatives de caractéristiques électrotechniques des un ou plusieurs réseaux électriques d'apprentissage.

10. Procédé selon l'une quelconque des revendications précédentes, comprenant : gérer le réseau électrique sur la base de l'estimation des amplitudes de tensions respectives des nœuds de l'ensemble de nœuds.

11. Dispositif de gestion de réseau électrique, comprenant un processeur, une interface de communications de données et une mémoire, couplées de manière opérationnelle au processeur, dans lequel le processeur est configuré pour la mise en œuvre d'un procédé selon l'une quelconque des revendications 1 à 10.

12. Programme d'ordinateur, chargeable dans une mémoire associée à un processeur, et comprenant des portions de code pour la mise en œuvre d'un procédé selon l'une quelconque des revendications 1 à 10 lors de l'exécution dudit programme par le processeur.

[Fig. 1]

FIG. 1

[Fig. 2a]

Obtenir des données représentatives de topologie du réseau électrique, les données représentatives de topologie comprenant un nombre $N$ de noeuds

10a-1

Configurer $N_{gnn}$ couches de réseau neuronal du réseau neuronal en graphe, chaque couche $i$ de réseau neuronal comprenant un ou plusieurs réseaux de neurones $L(k,i)$, et le nombre $N_{gnn}$ de couches de réseau neuronal correspondant au nombre $N$ de noeuds du réseau électrique

10a-2

Configurer, sur la base des données représentatives de topologie du réseau électrique comprenant une ou plusieurs connexions dans le réseau électrique, pour chaque connexion existant entre un premier et un deuxième noeud du réseau électrique correspondant respectivement à la connexion, une connexion neuronale entre un réseau de neurones $L(k,i1)$ d'une première couche $i1$ du réseau neuronal en graphe et un réseau de neurones $L(j,i2)$ d'une deuxième couche $i2$ du réseau neuronal en graphe, le premier et le deuxième noeud du réseau électrique correspondant respectivement aux première et deuxième couches $i1$ et $i2$ du réseau neuronal en graphe et la connexion neuronale entre les réseaux de neurones $L(k,i1)$ et $L(j,i2)$ correspondant à la connexion dans le réseau électrique entre le premier et le deuxième noeud

10a-3

Utiliser le réseau neuronal en graphe configuré pour la gestion du réseau électrique

10a-4

10a

# FIG. 2A

[Fig. 2b]

Obtenir des mesures de tension pour chaque
noeud d'un sous-ensemble d'un ensemble
de noeuds d'un réseau électrique

10b-1

Configurer un réseau neuronal en graphe
sur la base de données représentatives d'une
topologie du réseau électrique

10b-2

Déterminer, par le réseau neuronal en graphe,
une estimation des amplitudes de tensions
respectives des noeuds de l'ensemble de noeuds sur
la base des mesures de tension des noeuds
du sous-ensemble

10b-3

10b

# FIG. 2B

[Fig. 2c]

FIG. 2C

[Fig. 3]

## FIG. 3

[Fig. 4]

## FIG. 4

[Fig. 5a]

31

31a-3    31b-2    ①—31a-1

31b-1

②    ③—31a-2

## FIG. 5A

[Fig. 5b]

40a-1

$\bigcirc$ | $V_a$ | $P_a$ | $Q_a$ | $V_b$ | $P_b$ | $Q_b$ | $V_c$ | $P_c$ | $Q_c$ |

40a-2

| $G_{aa}$ | $G_{ab}$ | $G_{ac}$ | $G_{an}$ |
|---|---|---|---|
| $G_{ba}$ | $G_{bb}$ | $G_{bc}$ | $G_{bn}$ |
| $G_{ca}$ | $G_{bb}$ | $G_{bc}$ | $G_{bn}$ |
| $G_{na}$ | $G_{nb}$ | $G_{nc}$ | $G_{nn}$ |

| $B_{aa}$ | $B_{ab}$ | $B_{ac}$ | $B_{an}$ |
|---|---|---|---|
| $B_{ba}$ | $B_{bb}$ | $B_{bc}$ | $B_{bn}$ |
| $B_{ca}$ | $B_{cb}$ | $B_{cc}$ | $B_{cn}$ |
| $B_{na}$ | $B_{nb}$ | $B_{nc}$ | $B_{nn}$ |

①    40a-4

②    ③

40a-3

| $V_{re}^{an}$ | $V_{im}^{an}$ | $V_{re}^{bn}$ | $V_{im}^{bn}$ | $V_{re}^{cn}$ | $V_{im}^{cn}$ | $V_{re}^{nt}$ | $V_{im}^{nt}$ |

40a

## FIG. 5B

[Fig. 6]

## FIG. 6

[Fig. 7]

## FIG. 7

[Fig. 8]

AMP_V_MES

P_MES

P_N_MES ----▶ PM_P

AMP_V_N_MES ----▶ PM_V

MOD

EST_AMP_MES

EST_AMP_N_MES

Init. ▶ PSO

----▶ REP

——▶ IN

60

## FIG. 8

[Fig. 9a]

101a

102a

103a

104a

100a

## FIG. 9a

[Fig. 9b]

FIG. 9B

Europäisches Patentamt
European Patent Office
Office européen des brevets

**RAPPORT DE RECHERCHE EUROPEENNE**

Numéro de la demande

EP 25 16 6181

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | MOSHTAGH SHIVA ET AL: "Time-Synchronized State Estimation Using Graph Neural Networks in Presence of Topology Changes", 2023 NORTH AMERICAN POWER SYMPOSIUM (NAPS), IEEE, 15 octobre 2023 (2023-10-15), pages 1-6, XP034473167, DOI: 10.1109/NAPS58826.2023.10318579 * abrégé * * Chapitres I - IV; page 1 - page 5; figures 1, 2; tableaux I-III * | 1-12 | INV. G06N3/045 G06N3/088 |
| X | OGNJEN KUNDACINA: "Application of Deep Learning Methods in Monitoring and Optimization of Electric Power Systems", ARXIV.ORG, CORNELL UNIVERSITY LIBRARY, 201 OLIN LIBRARY CORNELL UNIVERSITY ITHACA, NY 14853, 1 septembre 2023 (2023-09-01), XP091602904, * abrégé * * Section 1.6; page 32 - page 35 * * Chapitres 2-3; page 43 - page 68; figures 2.1-3.3 * | 1-12 | |

DOMAINES TECHNIQUES RECHERCHES (IPC)

G06N

Le présent rapport a été établi pour toutes les revendications

| Lieu de la recherche | Date d'achèvement de la recherche | Examinateur |
|---|---|---|
| La Haye | 2 avril 2025 | Hasnas, Sergiu |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................................
& : membre de la même famille, document correspondant

EPO FORM 1503 03.82 (P04C02)